(19) Europäisches Patentamt
European Patent Office
Office européen des brevets

(11) EP 4 060 641 A1

(12) EUROPEAN PATENT APPLICATION
published in accordance with Art. 153(4) EPC

(43) Date of publication:
21.09.2022 Bulletin 2022/38

(51) International Patent Classification (IPC):
G08G 1/01 (2006.01)

(21) Application number: 20905917.9

(22) Date of filing: 16.11.2020

(86) International application number:
PCT/CN2020/129078

(87) International publication number:
WO 2021/129227 (01.07.2021 Gazette 2021/26)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 27.12.2019 CN 201911380305

(71) Applicant: Huawei Technologies Co., Ltd.
Shenzhen, Guangdong 518129 (CN)

(72) Inventors:
• WANG, Meng
Shenzhen, Guangdong 518129 (CN)
• HU, Xianghui
Shenzhen, Guangdong 518129 (CN)
• YU, Qi
Shenzhen, Guangdong 518129 (CN)
• XIONG, Fuxiang
Shenzhen, Guangdong 518129 (CN)

(74) Representative: Isarpatent
Patent- und Rechtsanwälte Barth
Charles Hassa Peckmann & Partner mbB
Friedrichstrasse 31
80801 München (DE)

(54) **TRAFFIC INFORMATION PROCESSING METHOD AND DEVICE**

(57) This application relates to the field of artificial intelligence, and provides a traffic information processing method and apparatus. This can provide a more appropriate and reliable traffic control policy, and improve traffic service quality. The method includes: determining a target traffic model from a plurality of candidate traffic models by using historical traffic data, where the candidate traffic model includes at least one of the following: a driver model, a road propagation model, or a road network evaluation model, and the candidate traffic model corresponds to the historical traffic data; adjusting a parameter of the target traffic model based on current traffic data, where the parameter of the target traffic model is used for describing a current traffic running status; and generating a traffic control policy based on an adjusted parameter of the target traffic model, where the traffic control policy includes at least one of the following: navigation information of a driver, traffic signal control information, or road network boundary control information.

EP 4 060 641 A1

Determine a target traffic model from a plurality of candidate traffic models by using historical traffic data — S101

Adjust a parameter of the target traffic model based on current traffic data — S102

Generate a traffic control policy based on an adjusted parameter of the target traffic model — S103

FIG. 3

**Description**

This application claims priority to Chinese Patent Application No. 201911380305.9, filed with the China National Intellectual Property Administration on December 27, 2019 and entitled "TRAFFIC INFORMATION PROCESSING METHOD AND APPARATUS", which is incorporated herein by reference in its entirety.

**TECHNICAL FIELD**

Embodiments of this application relate to the field of artificial intelligence, and in particular, to a traffic information processing method and apparatus.

**BACKGROUND**

Currently, traffic information (for example, information such as a flow, a speed, and a density) is processed by using a traffic model (a road basic graphical model, a road network curve model, or the like) in the transportation field, to obtain processing results that can reflect statuses of different road units (for example, an intersection, a road section, or a road network). Then, the processing results of the traffic information are used for constructing a road information system (for example, a traffic signal control system).

Specifically, a preset traffic model corresponding to a road unit is first determined, and then parameter calibration (that is, determining a parameter related to the preset traffic model) is performed on the preset traffic model by using traffic data reported by a vehicle sensor, a road sensor, or the like. For example, a parameter of the road basic graphical model reflects a traffic forward propagation speed. Then, the road information system is constructed based on a parameter of the traffic model. For example, an optimized signal control solution, namely, a solution for controlling duration of traffic lights, is obtained based on the traffic forward propagation speed.

However, in the foregoing method, the preset traffic model may deviate from an actual situation. Consequently, a deviation of a processing result of traffic information is large, and an application effect of the constructed road information system is poor.

**SUMMARY**

Embodiments of this application provide a traffic information processing method and apparatus. This can provide a more appropriate and reliable traffic control policy, and improve traffic service quality.

To achieve the foregoing objective, the following technical solutions are used in embodiments of this application.

According to a first aspect, an embodiment of this application provides a traffic information processing method, including: determining a target traffic model from a plurality of candidate traffic models by using historical traffic data, where the candidate traffic model corresponds to the historical traffic data; adjusting a parameter of the target traffic model based on current traffic data, where the parameter of the target traffic model is used for describing a current traffic running status, and the current traffic data corresponds to the target traffic model; and generating a traffic control policy based on an adjusted parameter of the target traffic model.

In this embodiment of this application, the candidate traffic model includes at least one of the following: a driver model, a road propagation model, or a road network evaluation model. The historical traffic data includes at least one of the following: traffic data of a driver in a historical time period, traffic data of a target road in a historical time period, or traffic data of a target road network in a historical time period. The current traffic data includes at least one of the following: traffic data of the driver in a current time period, traffic data of the target road in a current time period, or traffic data of the target road network in a current time period. The traffic control policy includes at least one of the following: navigation information of the driver, traffic signal control information, or road network boundary control information.

The candidate traffic model corresponds to the historical traffic data, that is, a type of the historical traffic data corresponds to a type of the candidate traffic model. For example, if the historical traffic data is the traffic data of the driver in the historical time period, the plurality of candidate traffic models are a plurality of driver models. The current traffic data corresponds to the target traffic model. For example, the target traffic model is a target driver model. The traffic data of the driver in the current time period is obtained, and the parameter of the target driver model is adjusted based on the traffic data of the driver in the current time period. It should be understood that the parameter of the (target) traffic model is used for describing a current traffic running status. For example, a parameter of the driver model is used for describing a current driving habit (a travel radical degree, a route selection preference, or the like) of the driver, the road propagation model is used for describing a current traffic running status of a road, and the road network evaluation model is used for describing a current traffic running status of a road network.

It should be noted that the historical time period is a plurality of calculation time windows before a current moment (a time point). Similarly, for different statistical objects (namely, a vehicle, a road, or a road network), historical time periods correspond to different time lengths, and a length of the historical time period may be set based on an actual requirement. For example, for a driver, a historical time period may be set to a previous day. For a road section or an intersection (namely, a road), a historical time period may be set to a previous day, several previous days, a previous week, or the like. For a road network, a historical time period may be set to a previous week, two previous weeks, or the like.

The current time period is a calculation time window before a current moment (a time point). Therefore, the current traffic data is traffic data in the calculation time window before the current moment. For different statistical objects (namely, a vehicle, a road, or a road network), calculation time windows are different. To be specific, for different statistical objects, current time periods correspond to different time windows, and a value of the time window may be set based on an actual requirement. For example, for a driver, a calculation time window may be set to a small value, for example, set to 1 minute (min) to 5 min. For a road section or an intersection (namely, a road), a calculation time window may be set to a moderate value, for example, set to 15 min to 30 min. For a road network, a calculation time window may be set to a large value, for example, set to one hour (h) or more than 1h.

In this embodiment of this application, a regression analysis method, a least square method, or a gradient optimization method (for example, a gradient descent method) may be used to adjust the parameter of the target traffic model based on the current traffic data (which may also be referred to as performing parameter calibration on the parameter of the target traffic model). Alternatively, another method may be used to adjust the parameter of the target traffic model. This is not limited in embodiments of this application.

According to the traffic information processing method provided in this embodiment of this application, the target traffic model may be determined from the plurality of candidate traffic models by using the historical traffic data, where the candidate traffic model includes at least one of the following: a driver model, a road propagation model, or a road network evaluation model. Then, the parameter of the target traffic model is adjusted based on the current traffic data. The traffic control policy is further generated based on the adjusted parameter of the target traffic model, where the traffic control policy includes at least one of the following: navigation information of the driver, traffic signal control information, or road network boundary control information. This can provide a more appropriate and reliable traffic control policy, and improve traffic service quality.

In a possible implementation, the historical traffic data is the traffic data of the driver in the historical time period, the target traffic model is a target driver model, and the traffic data of the driver includes traffic data of a vehicle driven by the driver or travel habit data of the driver. Traffic data of the vehicle driven by the driver in the historical time period includes an acceleration and a speed of the vehicle driven by the driver in the historical time period, and travel habit data of the driver in the historical time period includes a travel probability or travel probabilities of one or more trips of the driver in the historical time period and a selection probability or selection probabilities of one or more routes corresponding to each trip. The traffic data of the driver in the current time period includes an acceleration and a speed of the vehicle driven by the driver in the current time period, and travel habit data of the driver in the current time period includes a travel probability or travel probabilities of one or more trips of the driver in the current time period and a selection probability or selection probabilities of one or more routes corresponding to each trip.

In this embodiment of this application, a position and a license plate number of the vehicle driven by the driver may be extracted based on track data of the vehicle in the historical time period (namely, data reported by a sensor, for example, data reported by a position sensor in the vehicle on a previous day or data reported by another sensor such as an electronic police). Then, the acceleration and the speed of the vehicle driven by the driver are determined based on data such as a position and a license plate number of a vehicle (for example, a vehicle ahead) near the vehicle driven by the driver.

In this embodiment of this application, travel data (for example, a trip and a route) of a driver in a historical time period (it should be noted that the historical time period herein may be a time in a unit of a day, for example, 10 days, 20 days, or 30 days) may be collected. A travel probability or travel probabilities of one or more trips of the driver and a selection probability or selection probabilities of one or more routes corresponding to each trip are obtained through calculation based on the travel data of the driver in the historical time period.

In a possible implementation, the traffic control policy is the navigation information of the driver, and the generating a traffic control policy based on an adjusted parameter of the target traffic model includes: setting a weight of a path on a navigation map based on the adjusted parameter of the target driver model, where the parameter of the target driver model is used for describing a current driving habit of the driver; and generating the navigation information of the driver based on the weight of the path on the navigation map.

According to the traffic information processing method provided in this embodiment of this application, from a perspective of the vehicle driven by the driver, the target driver model is determined from a plurality of candidate driver models by using the traffic data of the driver in the historical time period, the parameter of the target driver model is adjusted by using the traffic data of the driver in the current time period, and the navigation information of the driver is generated. This can provide a more comprehensive and practical personalized navigation service for the driver.

In a possible implementation, the historical traffic data is the traffic data of the target road in the historical time period, and the target traffic model is a target road propagation model. The traffic data of the target road in the historical time period includes at least two of a flow, a speed, and a density of the target road in the historical time period. The traffic data of the target road in the current time period includes at least two of a flow, a speed, and a density of the target road in the current time period.

It should be noted that the road propagation model may be a road curve model, for example, a road basic graphical model. The road propagation model may be a model in another form. This is not limited in embodiments of this application.

In this embodiment of this application, the road basic graphical model is a curve model reflecting a flow-density-speed relationship of a road, and the road basic graphical model may be a three-dimensional curve or a two-dimensional curve (namely, a curve including two of the flow, the density, or the speed, for example, a flow-density curve including the flow and the density of the road).

In a possible implementation, the traffic control policy is the traffic signal control information, and the generating a traffic control policy based on an adjusted parameter of the target traffic model includes: determining a signal control constraint condition based on an adjusted parameter of the target road propagation model, where the parameter of the target road propagation model is used for describing the current traffic running status of the target road; and generating the traffic signal control information by using the signal control constraint condition as an optimization condition of a traffic signal control model, where the signal control constraint condition is determined based on the adjusted parameter of the target road propagation model.

According to the traffic information processing method provided in this embodiment of this application, from a perspective of the road, the target road propagation model is determined from a plurality of candidate road propagation models by using the traffic data of the target road in the historical time period, the parameter of the target road propagation model is adjusted by using the traffic data of the target road in the current time period, and the traffic signal control information is generated. Because the parameter of the target road propagation model is adjusted based on the traffic data (which may be understood as real-time traffic data) of the target road in the current time period, the obtained road propagation model is more reliable as regularity and randomness of a traffic flow and heterogeneity between roads are considered. Therefore, traffic signal control can be performed adaptively and more accurately.

In a possible implementation, the historical traffic data is the traffic data of the target road network in the historical time period, and the target traffic model is a target road network evaluation model. The traffic data of the target road network in the historical time period includes at least two of a flow, a speed, and a density of the target road network in the historical time period. The traffic data of the target road network in the current time period includes at least two of a flow, a speed, and a density of the target road network in the current time period.

It should be noted that the road network evaluation model may be a road network curve model or a model in another form. This is not limited in embodiments of this application.

In this embodiment of this application, the road network curve model is a curve model reflecting a flow-density-speed relationship of a road network, and the road network curve model may be a three-dimensional curve or a two-dimensional curve (namely, a curve including two of the flow, the density, or the speed, for example, a density-speed curve including the speed and the density of the road network).

In a possible implementation, the traffic control policy is the road network boundary control information, and the generating a traffic control policy based on an adjusted parameter of the target traffic model includes: determining a capacity or a flow of the target road network based on an adjusted parameter of the target road network evaluation model and a macroscopic traffic flow model, where the parameter of the target road network evaluation model is used for describing the current traffic running status of the target road network; and generating the road network boundary control information based on the capacity or the flow of the target road network.

In this embodiment of this application, the capacity or the flow of the target road network may reflect a congestion degree of the traffic status of the target road network. Therefore, the road network boundary control information is generated based on the capacity or the flow of the target road network, to implement traffic control on the road network. For example, if the density (namely, the capacity) of the target road network is close to a cutoff density of the target road network, it indicates that the target road network is congested. In this case, a vehicle in the target road network may be steered to another road network that is not congested.

According to the traffic information processing method provided in this embodiment of this application, from a perspective of the road network, the target road network evaluation model is determined from a plurality of candidate road network evaluation models by using the traffic data of the target road network in the historical time period, the parameter of the target road network evaluation model is adjusted by using the traffic data of the target road network in the current time period, and the road network boundary control information is generated. Because the parameter of the target road network evaluation model is adjusted based on the traffic data (which may be understood as real-time traffic data) of the target road network in the current time period, the obtained road network evaluation model is more reliable as regularity and randomness of a transportation system are considered. Therefore, traffic control on a road network boundary can be performed adaptively and more accurately.

In a possible implementation, the traffic data of the target road network is determined based on traffic data of a road section included in the target road network.

In this embodiment of this application, the traffic data of the target road network is determined based on the traffic data of the road section included in the target road network. In other words, traffic data of road sections included in the target road network is aggregated to obtain the traffic data of the target road network. In a possible implementation, the traffic data of the road sections included in the target road network may be aggregated in the following manners:

$$q = \sum_{i=1}^{n} q_i$$

, where q indicates the flow of the target road network, $q_i$ indicates a flow of an $i^{th}$ road section included in the target road network, and n indicates a quantity of road sections included in the target road network.

$$v = \frac{\sum_{i=1}^{n} v_i q_i}{\sum_{i=1}^{n} q_i}$$

, where v indicates the speed of the target road network, and $v_i$ indicates a speed of an $i^{th}$ road section included in the

$$k = \sum_{i=1}^{n} \frac{k_i}{n}$$

target road network. , where k indicates the density of the target road network, and $k_i$ indicates a density of an $i^{th}$ road section included in the target road network.

In a possible implementation, the traffic information processing method provided in this embodiment of this application further includes: presenting traffic information on different levels based on different scales, where the traffic information on different levels is separately traffic information of the driver, traffic information of the target road, and traffic information of the target road network. The traffic information of the driver includes the traffic data of the driver in the current time period and the parameter of the target driver model, the traffic information of the target road includes the traffic data of the target road in the current time period and the parameter of the target road propagation model, and the traffic information of the target road network includes the traffic data of the target road network in the current time period and the parameter of the target road network evaluation model.

In this embodiment of this application, the traffic information on different levels is presented based on different scales, and presentation (for example, zooming in or zooming out) based on different scales may be switched by performing a UI operation. For example, presentation is performed based on a microscopic scale, a mesoscopic scale, and a macroscopic scale. Microscopic traffic information is traffic information (namely, the traffic information of the driver) of the vehicle, mesoscopic traffic information is traffic information of the road, and macroscopic traffic information is traffic information of the road network.

In a possible implementation, the traffic information on different levels is presented in one or more of the following manners: a display, an electronic map, or a projection.

Optionally, the traffic information on different levels may be presented on a display (for example, a city brain), a display on a vehicle-mounted terminal, a display on a mobile phone, and the like, or may be projected on a front windshield of a vehicle and the like, or may be presented in navigation software such as an electronic map.

According to a second aspect, an embodiment of this application provides a traffic information processing apparatus, including a model determining module, a parameter adjustment module, and a traffic control policy generation module. The model determining module is configured to determine a target traffic model from a plurality of candidate traffic models by using historical traffic data. The candidate traffic model includes at least one of the following: a driver model, a road propagation model, or a road network evaluation model, the historical traffic data includes at least one of the following: traffic data of a driver in a historical time period, traffic data of a target road in a historical time period, or traffic data of a target road network in a historical time period, and the candidate traffic model corresponds to the historical traffic data. The parameter adjustment module is configured to adjust a parameter of the target traffic model based on current traffic data. The parameter of the target traffic model is used for describing a current traffic running status, the current traffic data includes at least one of the following: traffic data of a vehicle driven by the driver in a current time period, traffic data of the target road in a current time period, or traffic data of the target road network in a current time period, and the current traffic data corresponds to the target traffic model. The traffic control policy generation module is configured to generate a traffic control policy based on an adjusted parameter of the target traffic model. The traffic control policy includes at least one of the following: navigation information of the driver, traffic signal control information, or road network boundary control information.

In a possible implementation, the historical traffic data is the traffic data of the driver in the historical time period, the target traffic model is a target driver model, and the traffic data of the driver includes traffic data of a vehicle driven by the driver or travel habit data of the driver. Traffic data of the vehicle driven by the driver in the historical time period includes an acceleration and a speed of the vehicle driven by the driver in the historical time period, and travel habit data of the driver in the historical time period includes a travel probability or travel probabilities of one or more trips of the driver in the historical time period and a selection probability or selection probabilities of one or more routes corresponding to each trip. The traffic data of the driver in the current time period includes an acceleration and a speed of the vehicle driven by the driver in the current time period, and travel habit data of the driver in the current time period includes a travel probability or travel probabilities of one or more trips of the driver in the current time period and a selection probability or selection probabilities of one or more routes corresponding to each trip.

In a possible implementation, the traffic control policy is the navigation information of the driver. The traffic control policy generation module is specifically configured to: set a weight of a path on a navigation map based on the adjusted parameter of the target driver model; and generate the navigation information of the driver based on the weight of the path on the navigation map, where the parameter of the target driver model is used for describing a current driving habit of the driver.

In a possible implementation, the historical traffic data is the traffic data of the target road in the historical time period, and the target traffic model is a target road propagation model. The traffic data of the target road in the historical time period includes at least two of a flow, a speed, and a density of the target road in the historical time period. The traffic data of the target road in the current time period includes at least two of a flow, a speed, and a density of the target road in the current time period.

In a possible implementation, the traffic control policy is the traffic signal control information. The traffic control policy generation module is specifically configured to: determine a signal control constraint condition based on an adjusted parameter of the target road propagation model; and generate the traffic signal control information by using the signal control constraint condition as an optimization condition of a traffic signal control model, where the parameter of the target road propagation model is used for describing the current traffic running status of the target road, and the signal control constraint condition is determined based on the adjusted parameter of the target road propagation model.

In a possible implementation, the historical traffic data is the traffic data of the target road network in the historical time period, and the target traffic model is a target road network evaluation model. The traffic data of the target road network in the historical time period includes at least two of a flow, a speed, and a density of the target road network in the historical time period. The traffic data of the target road network in the current time period includes at least two of a flow, a speed, and a density of the target road network in the current time period.

In a possible implementation, the traffic control policy is the road network boundary control information. The traffic control policy generation module is specifically configured to: determine a capacity or a flow of the target road network based on an adjusted parameter of the target road network evaluation model and a macroscopic traffic flow model; and generate the road network boundary control information based on the capacity or the flow of the target road network, where the parameter of the target road network evaluation model is used for describing the current traffic running status of the target road network.

In a possible implementation, the traffic data of the target road network is determined based on traffic data of a road section included in the target road network.

In a possible implementation, the traffic information processing apparatus provided in this embodiment of this application further includes a display module. The display module is configured to present traffic information on different levels based on different scales, where the traffic information on different levels is separately traffic information of the driver, traffic information of the target road, and traffic information of the target road network. The traffic information of the driver includes the traffic data of the driver in the current time period and the parameter of the target driver model, the traffic information of the target road includes the traffic data of the target road in the current time period and the parameter of the target road propagation model, and the traffic information of the target road network includes the traffic data of the target road network in the current time period and the parameter of the target road network evaluation model.

In a possible implementation, the traffic information on different levels is presented in one or more of the following manners: a display, an electronic map, or a projection.

According to a third aspect, an embodiment of this application provides a traffic information processing apparatus, including a processor and a memory coupled to the processor. The memory is configured to store computer instructions, and when the apparatus runs, the processor executes the computer instructions stored in the memory, to enable the apparatus to perform the method in any one of the first aspect and the possible implementations of the first aspect.

According to a fourth aspect, an embodiment of this application provides a traffic information processing apparatus. The traffic information processing apparatus exists in a product form of a chip. A structure of the traffic information processing apparatus includes a processor and a memory, and the memory is coupled to the processor. The memory is configured to store computer instructions, and the processor is configured to execute the computer instructions stored in the memory, to enable the traffic information processing apparatus to perform the method in any one of the first aspect and the possible implementations of the first aspect.

According to a fifth aspect, an embodiment of this application provides a computer-readable storage medium. The computer-readable storage medium may include computer instructions, and when the computer instructions are run on a computer, the method in any one of the first aspect and the possible implementations of the first aspect is performed.

It should be understood that, for beneficial effects achieved by the technical solutions in the second aspect to the fifth aspect and the corresponding possible implementations in embodiments of this application, refer to the foregoing technical effects in the first aspect and the corresponding possible implementations. Details are not described herein again.

## BRIEF DESCRIPTION OF DRAWINGS

FIG. 1(a) and FIG. 1(b) are schematic diagrams of architectures of a traffic information communication system according to an embodiment of this application;

FIG. 2 is a schematic diagram of hardware of a server for processing traffic information according to an embodiment of this application;

FIG. 3 is a schematic diagram 1 of a traffic information processing method according to an embodiment of this application;

FIG. 4 is a schematic diagram 2 of a traffic information processing method according to an embodiment of this application;

FIG. 5 is a schematic diagram 3 of a traffic information processing method according to an embodiment of this application;

FIG. 6 is a schematic diagram of a traffic route according to an embodiment of this application;

FIG. 7 is a schematic diagram 4 of a traffic information processing method according to an embodiment of this application;

FIG. 8 is a schematic diagram of a flow-density curve according to an embodiment of this application;

FIG. 9 is a schematic diagram of a parameter of a flow-density curve according to an embodiment of this application;

FIG. 10 is a schematic diagram 5 of a traffic information processing method according to an embodiment of this application;

FIG. 11 is a schematic diagram of a road according to an embodiment of this application;

FIG. 12 is a schematic diagram 6 of a traffic information processing method according to an embodiment of this application;

FIG. 13 is a schematic diagram 7 of a traffic information processing method according to an embodiment of this application;

FIG. 14(a), FIG. 14(b), and FIG. 14(c) are a schematic diagram of presentation of traffic information on different levels according to an embodiment of this application;

FIG. 15 is a schematic diagram 1 of a structure of a traffic information processing apparatus according to an embodiment of this application; and

FIG. 16 is a schematic diagram 2 of a structure of a traffic information processing apparatus according to an embodiment of this application.

## DESCRIPTION OF EMBODIMENTS

The term "and/or" in this specification describes only an association relationship for describing associated objects and represents that three relationships may exist. For example, A and/or B may represent the following three cases: Only A exists, both A and B exist, and only B exists.

In embodiments of this application, a word such as "example" or "for example" is used to give an example, an illustration, or description. Any embodiment or design scheme described as an "example" or "for example" in embodiments of this application should not be interpreted as being more preferred or having more advantages than another embodiment or design scheme. Specifically, usage of the word such as "example" or "for example" is intended to present a related concept in a specific manner.

In description of embodiments of this application, unless otherwise stated, "a plurality of" means two or more than two. For example, a plurality of processing units are two or more processing units. A plurality of systems are two or more systems.

The following first describes some concepts related to a traffic information processing method and apparatus provided in embodiments of this application.

A traffic model is a mathematical model used for describing a traffic running status in a transportation system.

The traffic model may be used for analyzing traffic statuses of a vehicle, a driver, a pedestrian, a road, a road network, and the like, for example, analyzing whether traffic is congested in a position, whether a road is congested, and whether a traffic accident occurs, to effectively perform traffic planning, organization, and management.

A driver model is used for describing a driving status of an individual vehicle, and the driver model is a microscopic traffic model.

A road propagation model is used for describing a propagation status of a traffic flow on a road, for example, a propagation speed. The road propagation model in embodiments of this application may be a road curve model (for example, a road basic graphical model). The road propagation model may alternatively be a model in another form. This is not limited herein. The road propagation model is a mesoscopic traffic model.

A road network evaluation model is used for describing a traffic status of a road network. For example, the road network is congested, or the road network is smooth. The road network evaluation model is a macroscopic traffic model.

A road section is a road between two adjacent intersections. To be specific, the road section is not connected to another intersection, other than the intersections at two ends, and is not connected to another road.

A road network is a road system including various roads (the roads include a road section and an intersection) that are interconnected and interleaved into a mesh in a specific area. It should be understood that a road network including all levels of highways is referred to as a highway network. A road network including various roads in an urban area is referred to as an urban road network.

To resolve the problems in the background, embodiments of this application provide a traffic information processing method and apparatus. A target traffic model may be determined from a plurality of candidate traffic models by using historical traffic data, where the candidate traffic model includes at least one of the following: a driver model, a road propagation model, or a road network evaluation model. Then, a parameter of the target traffic model is adjusted based on current traffic data, where the parameter of the target traffic model is used for describing a current traffic running status. A traffic control policy is further generated based on an adjusted parameter of the target traffic model, where the traffic control policy includes at least one of the following: navigation information of a driver, traffic signal control information, or road network boundary control information. The technical solutions in embodiments of this application can provide a more appropriate and reliable traffic control policy, and improve traffic service quality.

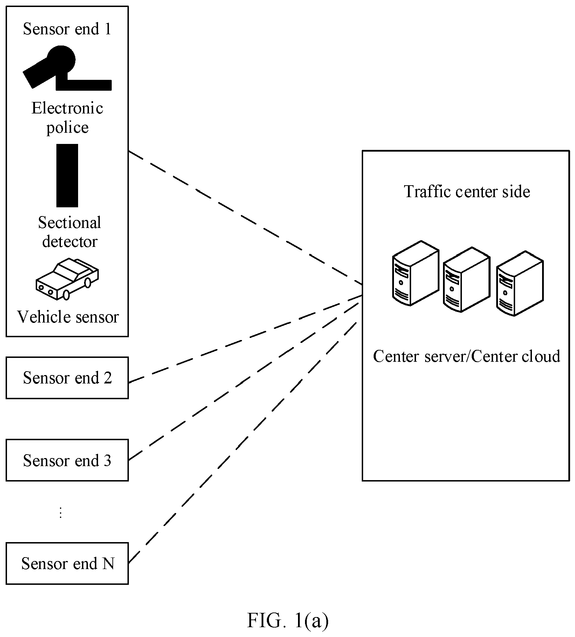

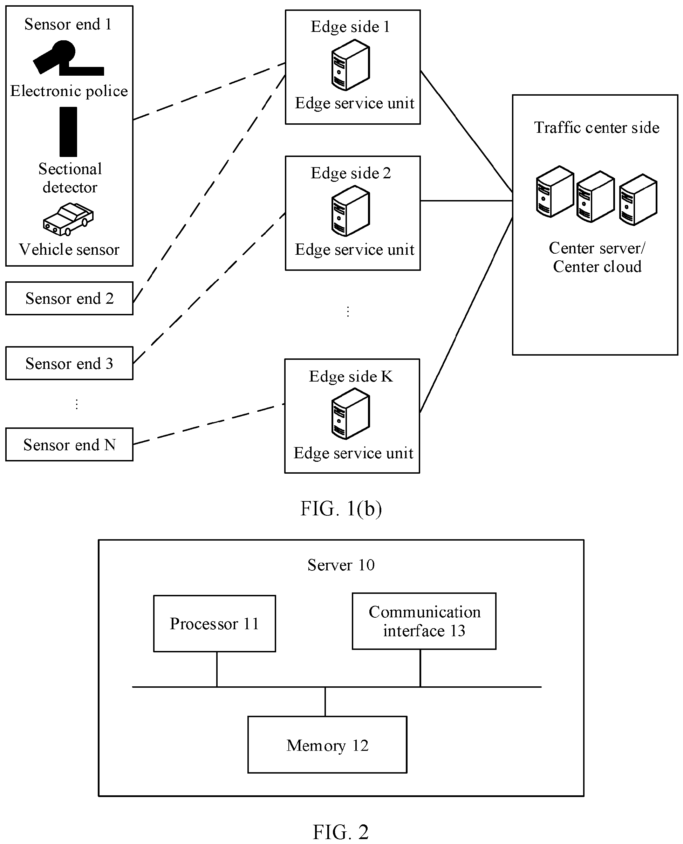

The traffic information processing method and apparatus provided in embodiments of this application may be applied to a traffic information communication system. FIG. 1(a) and FIG. 1(b) are schematic diagrams of architectures of the traffic information communication system according to an embodiment of this application. There may be two schematic diagrams of architectures of the traffic information communication system in this embodiment of this application. Specifically, the traffic information communication system shown in FIG. 1(a) includes at least one sensor end (which is denoted as a sensor end 1 to a sensor end N in FIG. 1(a)) and a traffic center side. The traffic center side may include a center server or a center cloud. The sensor end includes a plurality of types of sensors, for example, road sensors such as an electronic police (a camera) and a sectional detector (a detection coil, a geomagnetic field, a radar, or the like) that are installed on a road, and a vehicle sensor (a GPS positioning apparatus or a mobile phone positioning apparatus of a driver). Traffic data obtained by the electronic police may include data such as a license plate number of a vehicle, a position of a vehicle, and a queue length of vehicles. Traffic data detected by the sectional detector may include data such as a flow of vehicles. Traffic data obtained by the vehicle sensor may include data such as a position of a vehicle. The sensor end in the traffic information communication system may report traffic data obtained by the sensor end to the traffic center side, and a device (the center server or the center cloud) on the traffic center side analyzes and processes the traffic data to obtain a traffic control policy.

The traffic information communication system shown in FIG. 1(b) includes at least one sensor end (which is denoted as a sensor end 1 to a sensor end N in FIG. 1(b)), at least one edge side (which is denoted as an edge side 1 to an edge side K in FIG. 1(b)), and a traffic center side. The edge side includes an edge service unit (for example, an edge server), and the edge service unit on the edge side is mainly configured to preprocess traffic data of sensor ends, for example, aggregate the traffic data of the sensor ends, and detect validity of the traffic data. Each sensor end first sends traffic data obtained by the sensor end to an edge side of the sensor end (for example, in FIG. 1(b), the sensor end 1 and the sensor end 2 send traffic data obtained by the sensor end 1 and the sensor end 2 to the edge side 1, the sensor end 3 sends traffic data obtained by the sensor end 3 to the edge side 2, and the sensor end N sends traffic data obtained by the sensor end N to the edge side K). Then, each edge side reports the traffic data to the traffic center side, and a device (a center server or a center cloud) on the traffic center side analyzes and processes the traffic data, to obtain a traffic control policy.

With reference to the architecture of the traffic information communication system, data transmission from the sensor end to the edge side and then to the traffic center side is performed in an active reporting manner. Sensors in the communication system send traffic data to edge sides, and the edge sides aggregate the traffic data based on a data reporting format, and send the data to the traffic center side based on the format. Optionally, in this embodiment of this application, the format in which the edge side reports the traffic data may include two types.

In a first data format, a sensor in an area is used as a unit for reporting, for example, data of a sensor 1 in the area, data of a sensor 2 in the area, ..., and data of a sensor N in the area.

In a second data format, a road in an area is used as a unit for reporting, for example, data of a road 1 in the area, data of a road 2 in the area, ..., and data of a road M in the area.

The traffic information processing apparatus provided in embodiments of this application may be a server (for example, the center server shown in FIG. 1(a) and FIG. 1(b)) or a cloud server (for example, the center cloud shown in FIG. 1(a) and FIG. 1(b)). The following uses an example in which the traffic information processing apparatus is a server, to specifically describe components of the server used for processing traffic information provided in embodiments of this application with reference to FIG. 2. As shown in FIG. 2, a server 10 may include a processor 11, a memory 12, a communication interface 13, and the like.

The processor 11 is a core component of the server 10, and is configured to run an operating system of the server 10 and an application program (including a system application program and a third-party application program) on the server 30. For example, the processor 11 monitors network quality by running a network quality monitoring method program on the server.

In embodiments of this application, the processor 11 may be specifically a central processing unit (central processing unit, CPU), a general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The processor 11 may implement or execute various example logic blocks, modules, and circuits described with reference to content disclosed in embodiments of this application. Alternatively, the processor may be a combination of processors implementing a computing function, for example, a combination of one or more microprocessors, or a combination of a DSP and a microprocessor.

The memory 12 may be configured to store a software program and a module. The processor 11 executes various functional applications of the server 10 and data processing by running the software program and the module stored in the memory 12. The memory 12 may include one or more computer-readable storage media. The memory 12 includes a program storage area and a data storage area. The program storage area may store an operating system, an application program required for at least one function, and the like. The data storage area may store data created by the server 10, and the like. In embodiments of this application, the memory 12 may be configured to store historical traffic data, current traffic data, and the like.

In embodiments of this application, the memory 12 may specifically include a volatile memory (volatile memory), for example, a random access memory (random access memory, RAM); or may include a non-volatile memory (non-volatile memory), for example, a read-only memory (read-only memory, ROM), a flash memory (flash memory), a hard disk drive (hard disk drive, HDD), or a solid-state drive (solid-state drive, SSD); or may include a combination of the foregoing types of memories.

The communication interface 13 is an interface circuit used by the server 10 to communicate with another device. The communication interface may be a structure with a transceiver function, for example, a transceiver or a transceiver circuit. In embodiments of this application, the communication interface 13 on the server 10 may receive traffic data sent by a vehicle sensor or a road sensor (for example, an electronic police or a sectional detector).

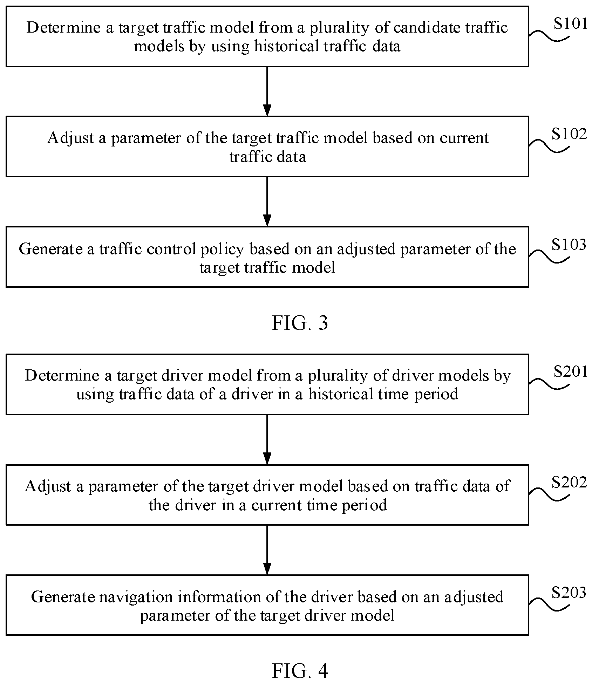

As shown in FIG. 3, a traffic information processing method provided in an embodiment of this application may include S101 to S103.

S101: Determine a target traffic model from a plurality of candidate traffic models by using historical traffic data.

The candidate traffic model may include at least one of the following: a driver model, a road propagation model, or a road network evaluation model. The historical traffic data includes at least one of the following: traffic data of a driver in a historical time period, traffic data of a target road in a historical time period, or traffic data of a target road network in a historical time period.

The candidate traffic model corresponds to the historical traffic data, that is, a type of the historical traffic data corresponds to a type of the candidate traffic model. For example, if the historical traffic data is the traffic data of the driver in the historical time period, the plurality of candidate traffic models are a plurality of driver models.

In embodiments of this application, the candidate traffic models are a plurality of commonly used traffic models in the traffic field. The determining a target traffic model from a plurality of candidate traffic models by using historical traffic data means: matching the traffic models with the historical traffic data, and selecting, from the plurality of candidate traffic models, a traffic model that is best-matched with the historical traffic data as the target traffic model for subsequent traffic data analysis.

Optionally, in embodiments of this application, a traffic model that has a smallest error or a most similar feature may be selected, by using a method such as a global error matching method, a feature matching method, or a probability map matching method, from the plurality of candidate traffic models as the target traffic model based on the historical traffic data. It is clear that the target traffic model may be determined from the plurality of candidate traffic models by using another matching method. This is not limited in embodiments of this application.

It should be noted that the historical time period is a plurality of calculation time windows before a current moment (a time point). Similarly, for different statistical objects (namely, a vehicle, a road, or a road network), historical time periods correspond to different time lengths, and a length of the historical time period may be set based on an actual requirement. For example, for a driver, a historical time period may be set to a previous day. For a road section or an intersection (namely, a road), a historical time period may be set to a previous day, several previous days, a previous week, or the like. For a road network, a historical time period may be set to a previous week, two previous weeks, or the like.

S102: Adjust a parameter of the target traffic model based on current traffic data.

The current traffic data may include at least one of the following: traffic data of the driver in a current time period, traffic data of the target road in a current time period, or traffic data of the target road network in a current time period.

It should be noted that the current time period is a calculation time window before a current moment (a time point) in embodiments of this application. Therefore, the current traffic data is traffic data in the calculation time window before the current moment. For different statistical objects (namely, a vehicle, a road, or a road network), calculation time windows are different. To be specific, for different statistical objects, current time periods correspond to different time windows, and a value of the time window may be set based on an actual requirement. For example, for a driver, a calculation time window may be set to a small value, for example, set to 1 minute (min) to 5 min. For a road section or an intersection (namely, a road), a calculation time window may be set to a moderate value, for example, set to 15 min to 30 min. For a road network, a calculation time window may be set to a large value, for example, set to one hour (h) or more than 1h.

The current traffic data corresponds to the target traffic model in embodiments of this application. For example, the target traffic model is a target driver model. The traffic data of the driver in the current time period is obtained, and the parameter of the target driver model is adjusted based on the traffic data of the driver in the current time period. It should be understood that the parameter of the (target) traffic model is used for describing a current traffic running status. For example, a parameter of the driver model is used for describing a current driving habit (a travel radical degree, a route selection preference, or the like) of the driver, the road propagation model is used for describing a current traffic running status of a road, and the road network evaluation model is used for describing a current traffic running status of a road network.

Optionally, in this embodiment of this application, a regression analysis method, a least square method, or a gradient optimization method (for example, a gradient descent method) may be used to adjust the parameter of the target traffic model based on the current traffic data (which may also be referred to as performing parameter calibration on the parameter of the target traffic model). Alternatively, another method may be used to adjust the parameter of the target traffic model. This is not limited in embodiments of this application.

S103: Generate a traffic control policy based on an adjusted parameter of the target traffic model.

The traffic control policy includes at least one of the following: navigation information of the driver, traffic signal control information, or road network boundary control information. For example, when the target traffic model is a target driver model, the traffic control policy is the navigation information of the driver, to provide personalized navigation services for different drivers. When the target traffic model is a target road propagation model, the traffic control policy is the traffic signal control information (for example, control duration of traffic lights at an intersection), to adaptively control traffic signals based on a current traffic running status of the target road. When the target traffic model is a target road network evaluation model, the traffic control policy is the road network boundary control information (for example, control duration of traffic lights at a road network boundary), to control traffic signals at the road network boundary based on a current traffic running status of the target road network.

According to the traffic information processing method provided in this embodiment of this application, the target traffic model may be determined from the plurality of candidate traffic models by using the historical traffic data, where the candidate traffic model includes at least one of the following: a driver model, a road propagation model, or a road network evaluation model. Then, the parameter of the target traffic model is adjusted based on the current traffic data. The traffic control policy is further generated based on the adjusted parameter of the target traffic model, where the traffic control policy includes at least one of the following: navigation information of the driver, traffic signal control information, or road network boundary control information. This can provide a more appropriate and reliable traffic control policy, and improve traffic service quality.

It should be noted that the traffic information processing method provided in this embodiment of this application may be used to process traffic information on different scales (microscopic, mesoscopic, and macroscopic scales), for example, process at least one of the traffic data of the driver (the microscopic scale), the traffic data of the road (the mesoscopic scale), or the traffic data of the road network (the macroscopic scale). Further, the corresponding traffic control policy is generated, to implement road information systems on a plurality of scales (for example, at least one of a personalized navigation system, a signal control analysis system, and a road network boundary control analysis system). The following embodiments separately describe processes of processing the traffic data of the driver, the traffic data of the road, and the traffic data of the road network.

It may be understood that for a driver (which may alternatively be understood as a vehicle), the historical traffic data is traffic data of the driver in a historical time period, the current traffic data is traffic data of the driver in a current time period, the plurality of candidate traffic models are a plurality of driver models, the target traffic model is a target driver model, and the traffic control policy is navigation information of the driver. As shown in FIG. 4, a traffic information processing method provided in an embodiment of this application may include S201 to S203.

S201: Determine a target driver model from a plurality of driver models by using traffic data of a driver in a historical time period.

It should be understood that the traffic data of the driver includes traffic data of a vehicle driven by the driver or travel habit data of the driver. The traffic data of the vehicle driven by the driver in the historical time period includes an acceleration and a speed of the vehicle driven by the driver in the historical time period, and the travel habit data of the driver in the historical time period includes a travel probability or travel probabilities of one or more trips of the driver in the historical time period and a selection probability or selection probabilities of one or more routes corresponding to each trip.

In this embodiment of this application, a position and a license plate number of the vehicle driven by the driver may be extracted based on track data of the vehicle in the historical time period (namely, data reported by a sensor, for example, data reported by a position sensor in the vehicle on a previous day or data reported by another sensor such as an electronic police). Then, the acceleration and the speed of the vehicle driven by the driver are determined based on data such as a position and a license plate number of a vehicle (for example, a vehicle ahead) near the vehicle driven by the driver.

Table 1 shows an example of track data of a vehicle collected by one electronic police (a camera) on a road passed by the vehicle, and Table 2 shows an example of track data of a vehicle collected by a position sensor in the vehicle on a road.

**Table 1**

| License plate encryption information | Vehicle registration address | ID length | Time | ID of a detector |
|---|---|---|---|---|
| 2D******5B****1 | Province A | 5 | 06:23:39, March 19, 2018 | ***5***1 |

In Table 1, a license plate number of the vehicle may be obtained based on the license plate encryption information of the vehicle, and the track data (data in Table 1) that is the same as the license plate number of the vehicle driven by the driver is found from massive data collected by the electronic police. The ID of the detector is a position of the electronic police collecting the track data of the vehicle, namely, a position of the vehicle. The time is time at which the track data of the vehicle is collected.

It should be understood that, in a running process of the vehicle, a plurality of electronic police at road sections or intersections passed by the vehicle may collect a plurality of groups of track data of the vehicle that are similar to that in Table 1. As shown in Table 2, an acceleration and a speed of the vehicle are calculated based on position information and time information of electronic devices collected by the plurality of electronic police, and position information and time information of a vehicle adjacent to the vehicle.

**Table 2**

| Date | Time | License plate number | Longitude | Latitude | Speed | Azimuth |
|---|---|---|---|---|---|---|
| 20190401 | 12409 | **C***4 | 114.184059 | 22.648478 | 9.0 | 74 |

It should be understood that there are 86400 seconds (s) in total in a day. In Table 2, the time 12409 indicates a total of seconds from 00:00:00 to a current moment, and 12409s indicates a moment of 03:26:49.

Similarly, in Table 2, a plurality of groups of track data similar to that shown in Table 2 may alternatively be collected by the position sensor of the vehicle, and position information (the longitude and the latitude), time information, and a speed of the vehicle may be extracted from the track data of the vehicle. Then, an acceleration and the speed of the vehicle are obtained based on position information, time information, and a speed of a vehicle adjacent to the vehicle.

In embodiments of this application, the track data of the vehicle may alternatively be obtained by using another method, to calculate the acceleration and the speed of the vehicle. This is not limited herein.

In an implementation, when the traffic data of the driver in the historical time period is the acceleration and the speed of the vehicle driven by the driver in the historical time period, the plurality of target driver models may be a plurality of equations of relationships between the acceleration and the speed of the vehicle. Table 3 shows three commonly used driver models, namely, acceleration equations.

**Table 3**

| Proposer | Driver model (acceleration equation) | Parameter of the model |
|---|---|---|
| Pipes (1953) | $a_n(t+\tau)=c(v_n(t)-v_{n-1}(t))$ | $c$ |
| Gazis et al. (1961) | $$a_n\left(t+\tau\right)=cv_n^m\left(t\right)\frac{v_n\left(t\right)-v_{n-1}\left(t\right)}{\left(x_n\left(t\right)-x_{n-1}\left(t\right)\right)^l}$$ | $c, m, l$ |
| Newell (1961) | $a_n(t)=c(x_n(t)-x_{n-1}(t))^l$ | $c$ |
| | $$a\left(t\right)=\frac{1}{\tau}\left[v_{opt}\left(x_n\left(t\right)-x_{n-1}\left(t\right)\right)-v_{n-1}\left(t\right)\right]$$ | $c, d$ |

The determining a target driver model from a plurality of driver models by using traffic data of a driver in a historical time period (that is, model matching) may specifically include: calibrating parameters of the plurality of driver models (namely, solving the parameters of the driver models) by using the acceleration and the speed of the vehicle in the historical time period, and an acceleration and the speed of the vehicle adjacent to the vehicle; solving an acceleration (which is referred to as a calculated acceleration) of the vehicle based on the speed of the vehicle and the parameters of the models; and comparing the calculated acceleration with the acceleration (which is referred to as a measured acceleration) determined based on the track data, to determine the target driver model. For example, a global matching method may be used. For a plurality of groups of accelerations and speeds of a vehicle, an accumulated error (namely, a sum of differences between a plurality of groups of calculated accelerations and measured accelerations) corresponding to each driver model may be obtained, and a driver model that has a smallest accumulated error is determined as the target driver model.

In this embodiment of this application, travel data (for example, a trip and a route) of a driver in a historical time period (it should be noted that the historical time period herein may be a time in a unit of a day, for example, 10 days, 20 days, or 30 days) may be collected. A travel probability or travel probabilities of one or more trips of the driver and a selection probability or selection probabilities of one or more routes corresponding to each trip are obtained through calculation based on the travel data of the driver in the historical time period.

Specifically, the travel probability of each trip of the driver is a ratio of a quantity of travel times of each trip of the driver to a sum of quantities of travel times of all trips. For example, it is assumed that trips of the driver in past 30 days include four types of trips: from home to a working place, from the working place to home, from the working place to a railway station, and from home to a shopping center. Table 4 shows quantities of travel times of the four types of trips and travel probabilities of the four types of trips.

**Table 4**

| Trip | Trip content | Quantity of travel times | Travel probability of the trip |
|---|---|---|---|
| 1 | From home to the working place | 20 | 0.4 |
| 2 | From the working place to home | 20 | 0.4 |
| 3 | From the working place to the railway station | 5 | 0.1 |
| 4 | From home to the shopping center | 5 | 0.1 |

For a trip of the driver, a selection probability of each route corresponding to the trip is a ratio of a quantity of times that the driver selects each route to a sum of quantities of times that the driver selects all routes corresponding to the trip. With reference to Table 4, a trip 1 (namely, the trip from home to the working place) in Table 4 is used as an example. There are three routes from home to the working place that can be selected by the driver in the historical time period. Table 5 shows collected quantities of times of selecting the three routes of the trip 1 and collected selection probabilities of the three routes.

**Table 5**

| Route | Quantity of selection times | Travel probability of the trip |
|---|---|---|
| 1 | 10 | 0.5 |

(continued)

| Route | Quantity of selection times | Travel probability of the trip |
|---|---|---|
| 2 | 6 | 0.3 |
| 3 | 4 | 0.2 |

In this embodiment of this application, quantities of times of selecting a plurality of routes corresponding to a trip 2 to a trip 4 and selection probabilities of the plurality of routes in Table 4 are not listed one by one herein.

In an implementation, the traffic data of the driver in the historical time period is a travel probability or travel probabilities of one or more trips of the driver in the historical time period and a selection probability or selection probabilities of one or more routes corresponding to each trip. The plurality of target driver models may be probability distribution models. The target driver model is matched, based on the travel probability or the travel probabilities of one or more trips of the driver in the historical time period, from a plurality of probability distribution models related to the trips, or matched, based on the selection probability or the selection probabilities of one or more routes corresponding to each trip in the historical time period, from a plurality of probability distribution models related to the routes. An idea of the foregoing model matching method is similar to that of the method in which the target driver model is matched based on the acceleration and the speed of the vehicle.

S202: Adjust a parameter of the target driver model based on traffic data of the driver in a current time period.

Correspondingly, with reference to description of the traffic data of the driver in S201, it can be learned that the traffic data of the driver in the current time period may include an acceleration and a speed of the vehicle driven by the driver in the current time period, and travel habit data of the driver in the current time period includes a travel probability or travel probabilities of one or more trips of the driver in the current time period and a selection probability or selection probabilities of one or more routes corresponding to each trip.

For related description of the traffic data of the driver in the current time period, refer to related description of the traffic data of the driver in the historical time period in S201. Details are not described herein again.

In this embodiment of this application, after the target driver model is determined in S201, a regression analysis method may be used based on the traffic data of the driver in the current time period, to obtain a parameter that has a smallest error between an output (for example, an acceleration) of the target driver model and actually measured data (for example, an acceleration), and the parameter is used as a finally adjusted parameter. It should be understood that, when the target driver model is one of the acceleration equations shown in Table 3 in S201, for the parameter of the target driver model, refer to the example in Table 3. When the target driver model is a probability distribution model, the parameter of the target driver model may be an average value or a variance of the probability distribution model.

In embodiments of this application, the parameter of the target driver model is used for describing a current driving habit of the driver, and the driving habit of the driver may include a radical degree of the driver or a route selection preference of the driver.

For the several driver models shown in Table 3, a large parameter of the driver model indicates that driving behavior of the driver is radical, and a small parameter of the driver model indicates that driving behavior of the driver is conservative. For example, if the target driver model is the driver model proposed by Newell (1961) in Table 3, parameters of the driver model are $c$ and $d$, the parameter c is used for describing whether the driver requires a fast acceleration, and the parameter $d$ is used for describing whether the driver frequently changes lanes. For example, when a value of the parameter $c$ is 0.7, it indicates that the driver requires a fast acceleration. When a value of the parameter $d$ is 0.8, it indicates that the driver frequently changes lanes. It can be seen that the driving habit of the driver is radical, and it is deduced that a driving speed of the driver is fast and the driver frequently overtakes.

For the probability distribution models corresponding to Table 4 and Table 5, when a parameter of the probability distribution model is a variance, the variance may indicate a travel preference of the driver for a trip (for example, a small variance indicates that the driver prefers the trip) or a selection preference of the driver for a route (for example, a small variance indicates that the driver prefers the route).

The parameter of the target driver model is adjusted based on the traffic data of the driver in the current time period (which may be understood as real-time traffic data), to better obtain the driving habit of the driver. The obtained driver model is more reliable because regularity and randomness of driving of the driver, and heterogeneity (which may be understood as that different drivers have different driving styles) between drivers are considered.

S203: Generate navigation information of the driver based on the adjusted parameter of the target driver model.

In this embodiment of this application, the navigation information of the driver is a personalized navigation route generated based on the driving habit of the driver.

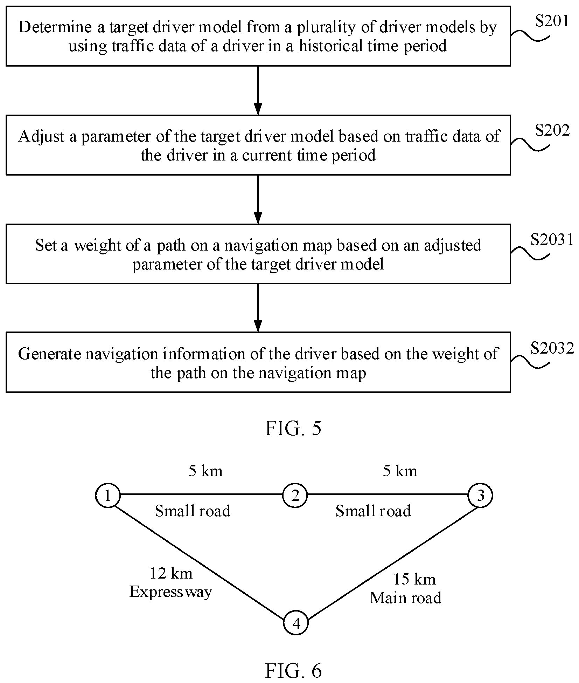

Optionally, with reference to FIG. 4, as shown in FIG. 5, S203 may be specifically implemented by performing S2031 and S2032.

S2031: Set a weight of a path on a navigation map based on the adjusted parameter of the target driver model.

S2032: Generate the navigation information of the driver based on the weight of the path on the navigation map.

In embodiments of this application, the adjusted parameter of the target driver model may be used to calculate the weight of the path on the navigation map. For example, for a radical driver, a high weight is set for a large road (a main road or an expressway) such as a level-1 road. For example, FIG. 6 shows planning of routes from a starting point ① to a destination ③. It can be learned that the routes from the starting point ① to the destination ③ may include two candidate routes.

Route 1: ①→②→③, including a path ①→② and a path ②→③ where the path ①→② is a small road with a length of 5 kilometers (km), and the path ②→③ is also a small road with a length of 5 km.

Route 2: ①→④→③, including a path ①→④ and a path ④→③, where the path ①→④ is an expressway with a length of 12 km, and the path ④→③ is a main road with a length of 15 km.

With reference to FIG. 6, for example, it is assumed that the target driver model of the driver is the driver model proposed by Pipes (1953) in Table 3, and the parameter c of the driver model is 0.8. A weight of each path is calculated based on the parameter $c$ by using the following method: for a small road, a weight of a path = a length of the path/(1 - the parameter $c$ of the target driver model); and for an expressway and a main road, a weight of a path = a length of the path x (1 - the parameter c of the target driver model). A weight of each path in Route 1 and Route 2 is as follows:

Route 1: a weight of the path ①→② is 25 (namely, 5/(1 - 0.8)), and a weight of the path ②→③ is 25 (namely, 5/(1 - 0.8)). In this way, a weight cost of Route 1 is 50(25 + 25).

Route 2: a weight of the path ①→④ is 2.4 (namely, 12 x (1 - 0.8)), and a weight of the path ④→③ is 3 (namely, 15 x (1 - 0.8)). In this way, a weight cost of Route 2 is 5.4.

According to a principle of a smallest weight cost of a route, Route 2, namely, the route ①→④→③, is set to a personalized navigation route of the driver. In other words, the navigation information of the driver is navigation information corresponding to Route 2.

With reference to FIG. 6, for another example, it is assumed that the target driver model of the driver is the driver model proposed by Pipes (1953) in Table 3, and the parameter c of the driver model is 0.2. Similarly, the foregoing method for determining a weight of a path is used, and a weight of each path in Route 1 and Route 2 is as follows:

Route 1: a weight of the path ①→② is 6.25 (namely, 5/(1 - 0.2)), and a weight of the path ②→③ is 6.25 (namely, 5/(1 - 0.2)). In this way, a weight cost of Route 1 is 12.5(6.25 + 6.25).

Route 2: a weight of the path ①→④ is 9.6 (namely, 12 x (1 - 0.2)), and a weight of the path ④→③ is 12 (namely, 15 x (1 - 0.2)). In this way, a weight cost of Route 2 is 21.6.

According to a principle of a smallest weight cost of a route, Route 1, namely, the route ①→②→③, is set to a personalized navigation route of the driver. In other words, the navigation information of the driver is navigation information corresponding to Route 1.

According to the traffic information processing method provided in this embodiment of this application, from a perspective of the vehicle driven by the driver, the target driver model is determined from a plurality of candidate driver models by using the traffic data of the driver in the historical time period, the parameter of the target driver model is adjusted by using the traffic data of the driver in the current time period, and the navigation information of the driver is generated. This can provide a more comprehensive and practical personalized navigation service for the driver.

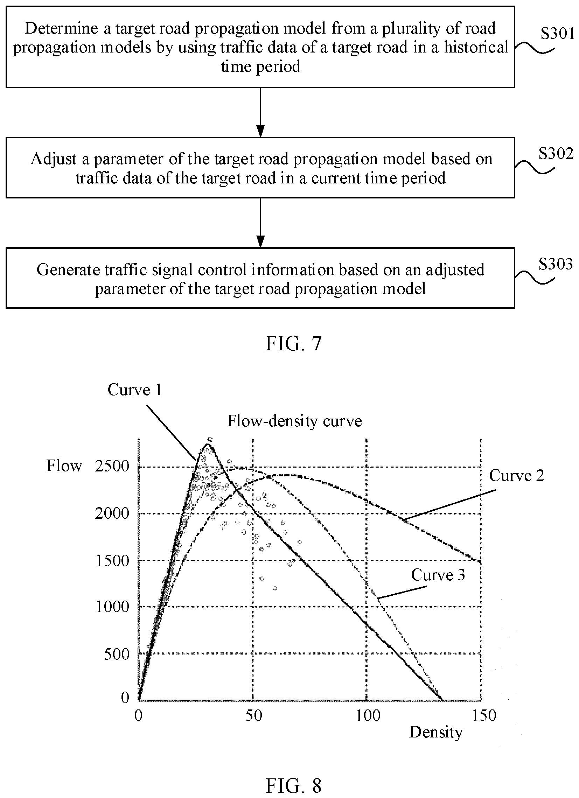

It may be understood that for a road (which is referred to as a target road in the following, and may include a road section and an intersection), the historical traffic data is traffic data of the target road in a historical time period, the current traffic data is traffic data of the target road in a current time period, the plurality of candidate traffic models are a plurality of road propagation models, the target traffic model is a target road propagation model, and the traffic control policy is traffic signal control information. As shown in FIG. 7, a traffic information processing method provided in an embodiment of this application may include S301 to S303.

S301: Determine a target road propagation model from a plurality of road propagation models by using traffic data of a target road in a historical time period.

It should be understood that the traffic data of the target road in the historical time period (a previous day or a previous week) includes at least two of a flow, a speed, and a density of the target road in the historical time period, and the target road may include a road section and an intersection.

It should be noted that the road propagation model may be a road curve model, for example, a road basic graphical model. The road propagation model may alternatively be a model in another form. This is not limited in embodiments of this application.

In this embodiment of this application, the road basic graphical model is a curve model reflecting a flow-density-speed relationship of a road, and the road basic graphical model may be a three-dimensional curve or a two-dimensional curve (namely, a curve including two of the flow, the density, or the speed, for example, a flow-density curve including the flow and the density of the road).

For example, the traffic data of the target road in the historical time period collected and reported by a road sensor, for example, a sectional detector, may be received (by a center server). Table 6 shows an example of the traffic data of the target road collected by the sectional detector.

**Table 6**

| Detection time | ID of a detector | Flow statistics | Lane number |
|---|---|---|---|
| April 1, 2019 00:00:00 | ******06 | 15 | 203 |

The flow of the target road may be obtained from the traffic data reported by the sectional detector in Table 6. It should be understood that the speed and the density of the target road may be detected by another sensor. This is not specifically limited in embodiments of this application.

With reference to Table 6, in the historical time period, a plurality of sectional detectors on the target road each may collect data similar to that shown in Table 6, to obtain a plurality of groups of flows and densities (namely, flows and densities in the historical time period), so that the plurality of groups of flows and densities are matched with a plurality of flow-density curves, to determine a flow-density curve of the target road. In other words, a target road curve model is obtained.

Optionally, in this embodiment of this application, a flow-density curve that is best-matched with the target road is determined, by using a feature matching method (a feature may be a slope feature, a curvature feature, or the like), from the plurality of candidate flow-density curves based on the flows and the densities of the target road in the historical time period. For example, FIG. 8 shows three candidate flow-density curves (namely, a curve 1, a curve 2, and a curve 3). The flows and the densities of the target road in the historical time period (which are shown as data points) are shown in a coordinate system, feature errors between the data points in the coordinate system and each candidate flow-density curve are calculated, and a flow-density curve that has a smallest feature error is selected as the target road propagation model. In FIG. 8, the curve 1 is the flow-density curve that is best-matched with the flows and the densities of the target road in the historical time period.

S302: Adjust a parameter of the target road propagation model based on traffic data of the target road in a current time period.

Correspondingly, with reference to S301, the traffic data of the target road in the current time period includes at least two of a flow, a speed, and a density of the target road in the current time period. For related description of the traffic data of the target road in the current time period, refer to related description of the traffic data of the target road in the historical time period in S301. Details are not described herein again.

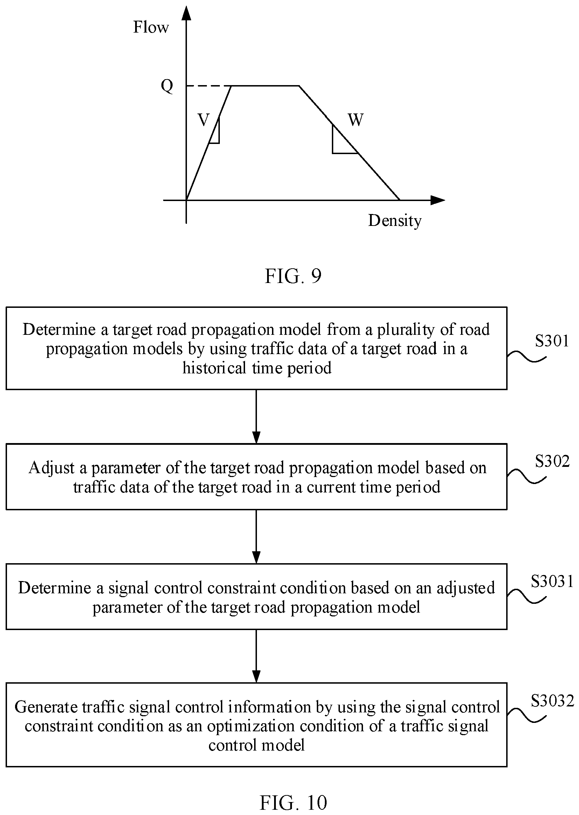

In this embodiment of this application, the parameter of the target road propagation model is used for describing a current traffic running status of the target road. For example, the target road propagation model is the foregoing flow-density curve. The traffic data of the target road in the current time period includes the flow and the density of the target road, and parameters of the target road propagation model include a flow upper limit value Q of the target road, a propagation speed W of the target road, and an overflow speed V of the target road. In this case, the parameters Q, W, and V of the target road propagation model are adjusted by using a least square method based on the flow and the density of the target road in the current time period, to obtain adjusted parameters Q, W, and V. FIG. 9 shows the foregoing three parameters in the flow-density curve.

The parameter of the target road propagation model is adjusted based on the traffic data of the target road in the current time period (which may be understood as real-time traffic data). The obtained road propagation model is more reliable because regularity and randomness of propagation of a traffic flow, and heterogeneity between roads are considered.

It should be noted that, in this embodiment of this invention, if no sensor is installed on the target road, the traffic data of the target road in the historical time period and the traffic data of the target road in the current time period cannot be obtained. In this case, the target road propagation model of the target road may be determined by using a transfer learning method, namely, performing road similarity matching, and determining a road propagation model of a road similar to the target road as the target road propagation model of the target road. In other words, a road feature of the target road, for example, a feature such as a topology feature (for example, both the road and the target road are left-turn roads), a distance (for example, a road length), or a cell feature (for example, whether there is a parking lot near the road), matches with a feature corresponding to a road on which a sensor is installed, and a road propagation model of a road that has a maximum quantity of features matching with features of the target road is used as the target road propagation model of the target road. Further, a parameter of the best-matched road propagation model is used as the parameter of the target road propagation model, and an adjusted parameter of the target road propagation model is further obtained.

S303: Generate traffic signal control information based on the adjusted parameter of the target road propagation model.

In this embodiment of this application, the traffic signal control information may be control duration of traffic lights of the target road.

With reference to FIG. 7, as shown in FIG. 10, S303 may be implemented by performing S3031 and S3032.

S3031: Determine a signal control constraint condition based on the adjusted parameter of the target road propagation model.

The signal control constraint condition is determined based on the adjusted parameter of the target road propagation model.

In this embodiment of this application, it is assumed that the target road is a road section i, the target road propagation model is the flow-density curve described in S302, and parameters of the flow-density curve are a flow Q, a propagation speed W, and an overflow speed V. The road section *i* (which may also be referred to as a link *i*) is divided into a plurality of units (which may be denoted as cells). For example, the road section i is divided into m cells, which are denoted as a cell $(i, 1)$, a cell $(i, 2)$, ..., a cell $(i, j)$, ..., and a cell $(i, m)$. The following four signal control constraint conditions may be determined based on the parameters of the flow-density curve.

$$\begin{cases} n_{i,j}(t+1) = n_{i,j}(t) + f_{i,j}(t) - f_{i,j+1}(t) \\ f_{i,j}(t) \le n_{i,j-1}(t) \\ f_{i,j}(t) \le Q_{i,j}(t) \\ f_{i,j}(t) \le \left(\dfrac{W}{V}\right)\left[N_{i,j} - n_{i,j}(t)\right] \end{cases}$$

A constraint condition 1 is $n_{i,j}(t+1) = n_{i,j}(t) + f_{i,j}(t) - f_{i,j+1}(t)$, where $n_{i,j}(t+1)$ indicates a quantity of vehicles in a $j^{th}$ cell of the road section i at a moment $t+1$, $n_{i,j}(t)$ indicates a quantity of vehicles in the $j^{th}$ cell of the road section i at a moment $t$, $f_{i,j}(t)$ indicates a quantity of vehicles moving into the $j^{th}$ cell of the road section *i* at the moment $t$, and $f_{i,j+1}(t)$ indicates a quantity of vehicles moving from the $j^{th}$ cell of the road section *i* to a $(j+1)^{th}$ cell at the moment $t$ (it should be noted that, in the constraint condition 1, for a cell, only a case in which a vehicle moving into or moving out of the cell in a single direction is considered).

In other words, the constraint condition 1 indicates that for a cell, a quantity of vehicles in the cell at the moment $t+1$ is equal to a quantity of vehicles in the cell at the moment t plus a quantity of vehicles moving into the cell at the moment t minus a quantity of vehicles moving out of the cell.

A constraint condition 2 is $f_{i,j}(t) \le n_{i,j-1}(t)$, where $f_{i,j}(t)$ indicates a quantity of vehicles moving into a $j^{th}$ cell of the road section i at a moment $t$, and $n_{i,j-1}(t)$ indicates a quantity of vehicles in a $(j-1)^{th}$ cell of the road section i at the moment $t$.

In other words, the constraint condition 2 indicates that for a cell, a quantity of vehicles moving into the cell at the moment $t$ is less than or equal to a quantity of vehicles in a previous cell of the cell at the moment $t$.

A constraint condition 3 is $f_{i,j}(t) \le Q_{i,j}(t)$, where $f_{i,j}(t)$ indicates a quantity of vehicles moving into a $j^{th}$ cell of the road section i at a moment $t$, and $Q_{i,j}(t)$ indicates a flow upper limit of the $j^{th}$ cell of the road section *i* at the moment $t$.

In other words, the constraint condition 3 indicates that for a cell, a quantity of vehicles moving into the cell at the moment $t$ is less than or equal to a flow upper limit of the cell at the moment $t$.

A constraint condition 4 is $$f_{i,j}(t) \le \left(\frac{W}{V}\right)\left[N_{i,j} - n_{i,j}(t)\right]$$, where $f_{i,j}(t)$ indicates a quantity of vehicles moving into a $j^{th}$ cell of the road section i at a moment $t$, W indicates a propagation speed, V indicates an overflow speed, $N_{i,f}$ indicates a capacity upper limit of a cell that is specified in the transportation manual, and $n_{i,j}(t)$ indicates a quantity of vehicles in the $j^{th}$ cell of the road section i at the moment $t$.

S3032: Generate the traffic signal control information by using the signal control constraint condition as an optimization condition of a traffic signal control model.

In this embodiment of this application, the foregoing four signal control constraint conditions are used as optimization conditions of the traffic signal control model (namely, a target function) of the target road, to solve an optimization problem, that is, to solve the traffic signal control model, so as to obtain the traffic signal control information, namely, the control duration of traffic lights. It should be noted that the traffic signal control model of the target road may be a model related to $f_{i,j}(t)$ in the conventional technology. In this way, the foregoing four signal control constraint conditions are used as the constraint conditions of the traffic signal control model, to obtain the traffic signal control information.

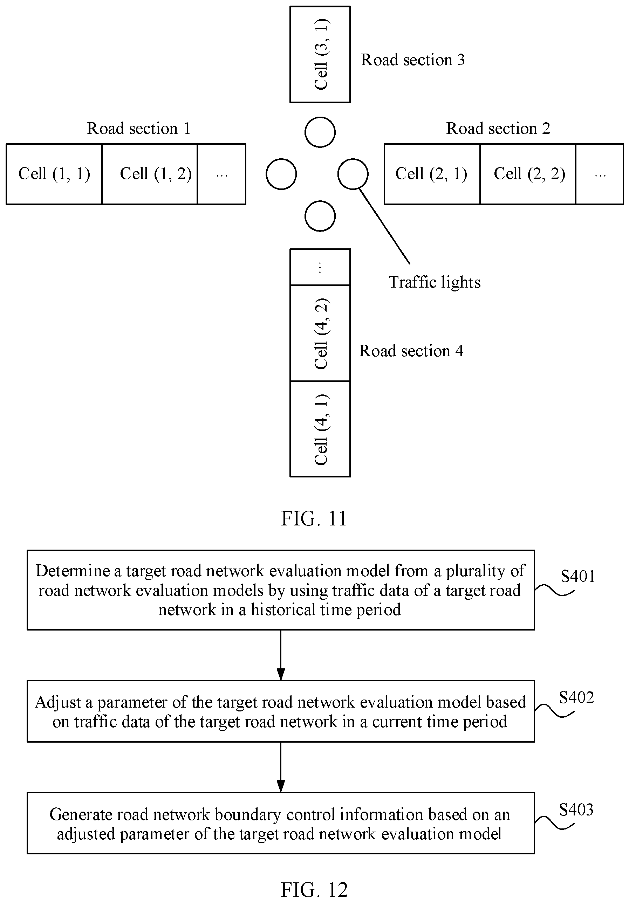

For example, for a road shown in FIG. 11, the road includes four road sections and one crossroad. Traffic data of a road section 1 and a road section 2 may be analyzed, to obtain a signal control constraint condition corresponding to the road section 1 and a signal control constraint condition corresponding to the road section 2, and the traffic signal control model is solved based on the signal control constraint conditions, to obtain control duration of traffic lights in an east-west direction. Similarly, traffic data of a road section 3 and a road section 4 may be analyzed, to obtain a signal control constraint condition corresponding to the road section 3 and a signal control constraint condition corresponding to the road section 4, and the traffic signal control model is solved based on the signal control constraint conditions, to obtain control duration of traffic lights in a north-south direction. Alternatively, the traffic signal control model is solved based on a signal control constraint condition corresponding to the road section 1, a signal control constraint condition corresponding to the road section 2, a signal control constraint condition corresponding to the road section 3, and a signal control constraint condition corresponding to the road section 4, to obtain duration of traffic lights in an east-west direction and duration of traffic lights in a north-south direction.

According to the traffic information processing method provided in this embodiment of this application, from a perspective of the road, the target road propagation model is determined from the plurality of candidate road propagation models by using the traffic data of the target road in the historical time period, the parameter of the target road propagation model is adjusted by using the traffic data of the target road in the current time period, and the traffic signal control information is generated. Therefore, traffic signal control can be performed adaptively and more accurately.

It may be understood that for a road network (which is referred to as a target road network in the following), the historical traffic data is traffic data of the target road network in a historical time period, the current traffic data is traffic data of the target road network in a current time period, the plurality of candidate traffic models are a plurality of road network evaluation models, the target traffic model is a target road network evaluation model, and the traffic control policy is road network boundary control information. As shown in FIG. 12, a traffic information processing method provided in an embodiment of this application may include S401 to S403.

S401: Determine a target road network evaluation model from a plurality of road network evaluation models by using traffic data of a target road network in a historical time period.

It should be understood that the traffic data of the target road network in the historical time period (a previous week or two previous weeks) includes at least two of a flow, a speed, and a density of the target road network in the historical time period (for example, one week or two weeks).

In this embodiment of this application, the traffic data of the target road network is determined based on traffic data of a road section included in the target road network. In other words, traffic data of road sections included in the target road network is aggregated to obtain the traffic data of the target road network. In a possible implementation, the

$$q = \sum_{i=1}^{n} q_i$$

traffic data of the road sections included in the target road network may be aggregated in the following manners: , where $q$ indicates the flow of the target road network, $q_i$ indicates a flow of an i$^{th}$ road section included in the target

$$v = \frac{\sum_{i=1}^{n} v_i q_i}{\sum_{i=1}^{n} q_i}$$

road network, and $n$ indicates a quantity of road sections included in the target road network. , where $v$ indicates the speed of the target road network, and $v_i$ indicates a speed of the i$^{th}$ road section included in the target road

$$k = \sum_{i=1}^{n} \frac{k_i}{n}$$

network. , where $k$ indicates the density of the target road network, and $k_i$ indicates a density of the i$^{th}$ road section included in the target road network.

It should be noted that the road network evaluation model may be a road network curve model or a model in another form. This is not limited in embodiments of this application.

In this embodiment of this application, the road network curve model is a curve model reflecting a flow-density-speed relationship of a road network, and the road network curve model may be a three-dimensional curve or a two-dimensional curve (namely, a curve including two of the flow, the density, or the speed, for example, a density-speed curve including the speed and the density of the road network).

Optionally, for example, the road network evaluation model is a density-speed curve. A best-matched density-speed curve is determined as the density-speed curve of the target road network, namely, used as the target road network evaluation model, by using a probability map matching method based on the density and the speed of the target road network in the historical time period.

S402: Adjust a parameter of the target road network evaluation model based on traffic data of the target road network in a current time period.

Correspondingly, with reference to S401, the traffic data of the target road network in the current time period includes at least two of a flow, a speed, and a density of the target road network in the current time period. For related description of the traffic data of the target road network in the current time period, refer to related description of the traffic data of the target road network in the historical time period in S401. Details are not described herein again.

In this embodiment of this application, the parameter of the target road network evaluation model is used for describing a current traffic running status of the target road network. If the target road network evaluation model is a density-speed curve, a relationship between the speed and the density of the target road network is:

$v = V(k)$, where $v$ indicates the speed, $k$ indicates the density, and $V(k)$ indicates a function expression of the density-speed curve. In this case, the traffic data of the target road network in the current time period is the speed and the density of the target road network in the current time period. In this way, an adjusted parameter of the density-speed curve $V(k)$ is obtained by using a gradient optimization method based on the speed and the density of the target road network in the current time period.

The parameter of the target road network evaluation model is adjusted based on the traffic data of the target road network in the current time period (which may be understood as real-time traffic data). The obtained road network evaluation model is more reliable because regularity and randomness of a transportation system are considered.

S403: Generate road network boundary control information based on an adjusted parameter of the target road network evaluation model.

In this embodiment of this application, the road network boundary control information may be information such as control duration of traffic lights at a road network boundary.

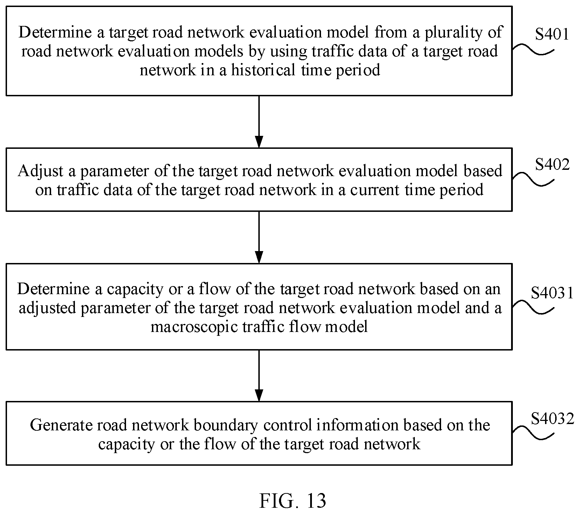

With reference to FIG. 12, as shown in FIG. 13, S403 may be implemented by performing S4031 and S4032.

S4031: Determine a capacity or a flow of the target road network based on the adjusted parameter of the target road network evaluation model and a macroscopic traffic flow model.

In this embodiment of this application, the macroscopic traffic flow model is a mathematical model describing a running feature of a traffic flow from perspectives of a flow, a speed, and a density of the traffic flow. The macroscopic traffic flow model may include a traffic flow basic graphics model, a vehicle pairing model, a traffic flow conservation model (which may also be referred to as a traffic flow conservation condition), and the like. In this embodiment of this application, an example in which the macroscopic traffic flow model is a traffic flow conservation condition is used for description.

The traffic flow conservation condition may be an LWR equation:

$$\begin{cases} k_t + q_t = 0 \\ q = kv \\ v = V(k) \end{cases},$$

where

$k_t$ indicates a partial derivative of a density function $k(t, x)$ with respect to $t$, $q_t$ indicates a partial derivative of a flow function $q(t, x)$ with respect to $x$, $t$ indicates time, and $x$ indicates displacement. In the LWR equation, $V = V(k)$ is known, a function expression of $V(k)$ may be obtained after the parameter is adjusted in S402, and the density function $k(t,x)$ and the flow function $q(t,x)$ may be obtained by solving the LWR equation.

It should be understood that a limiting value of the density function $k(t,x)$ of the target road network may reflect a capacity status of the target road network. It is clear that another indicator may alternatively be used to reflect the capacity of the target road network. A limiting value of the flow function $q(t, x)$ of the target road network may reflect a flow status of the target road network.

S4032: Generate the road network boundary control information based on the capacity or the flow of the target road network.

In this embodiment of this application, the capacity or the flow of the target road network may reflect a congestion degree of a traffic status of the target road network. Therefore, the road network boundary control information is generated based on the capacity or the flow of the target road network, to implement traffic control on the road network. For example, if the density (namely, the capacity) of the target road network is close to a cutoff density of the target road network, it indicates that the target road network is congested. In this case, a vehicle in the target road network may be steered to another road network that is not congested.

For example, capacities (densities) of a road network 1 and a road network 2 are used as an example. It is assumed that a limiting value of a density function of the road network 1 is 40, a limiting value of a density function of the road network 2 is 20, and cutoff densities of the road network 1 and the road network 2 are 50. It can be learned that the density of the road network 1 is close to the cutoff density, and the road network 1 may be in a congested state. The density of the road network 2 is small, and the road network 2 is in a free-flow state. In this case, a road network boundary control solution may be: increasing duration of green lights from the road network 1 to the road network 2, and reducing duration of green lights from the road network 2 to the road network 1, where the road network boundary control information is the duration of the green lights from the road network 1 to the road network 2, and the duration of the green lights from the road network 2 to the road network 1.

According to the traffic information processing method provided in this embodiment of this application, from a perspective of the road network, the target road network evaluation model is determined from the plurality of candidate road network evaluation models by using the traffic data of the target road network in the historical time period, the parameter of the target road network evaluation model is adjusted by using the traffic data of the target road network in the current time period, and the road network boundary control information is generated. Therefore, traffic control on the road network boundary can be performed adaptively and more accurately.

In conclusion, after the traffic data of the vehicle driven by the driver, the traffic data of the road, and the traffic data of the road network are analyzed, the traffic information processing method provided in embodiments of this application further includes: presenting traffic information on different levels based on different scales, and visualizing the traffic information.

The traffic information on different levels is separately traffic information of the driver, traffic information of the target road, and traffic information of the target road network. The traffic information of the driver includes the traffic data of the driver in the current time period (for example, the acceleration and the speed of the vehicle driven by the driver) and the parameter of the target driver model (for example, the parameter c in the acceleration equation proposed by Pipes (1953)). The traffic information of the target road includes the traffic data of the target road in the current time period (for example, at least two of the flow, the density, or the speed of the target road) and the parameter of the target road propagation model. The traffic information of the target road network includes the traffic data of the target road network in the current time period (for example, at least two of the flow, the density, or the speed of the target road network) and the parameter of the target road network evaluation model.

Optionally, the traffic information on different levels may be presented in one or more of the following manners: a display, an electronic map, or a projection in embodiments of this application. For example, the traffic information may be presented on a display (for example, a city brain), a display on a vehicle-mounted terminal, a display on a mobile phone, and the like, or may be projected at a location such as a front windshield of a vehicle and the like, or may be presented in an electronic map such as navigation software.

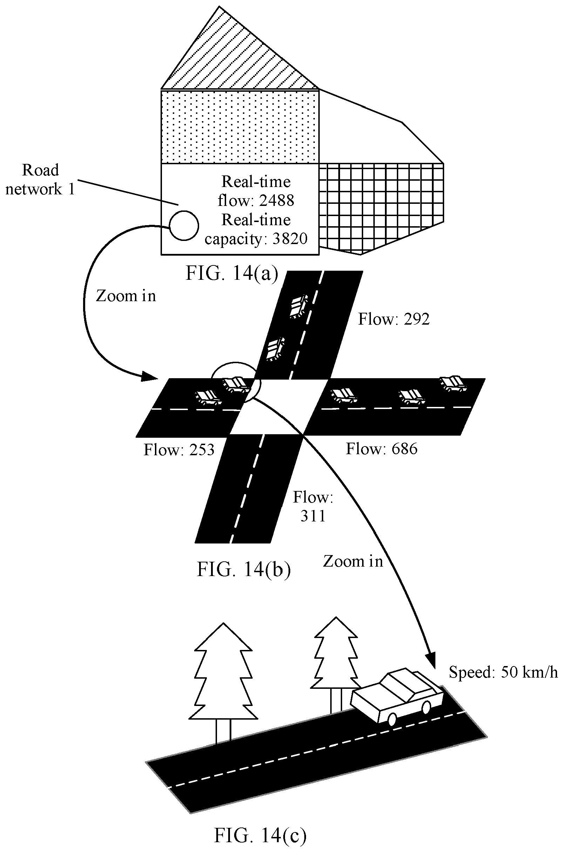

In this embodiment of this application, the traffic information on different levels is presented based on different scales, and presentation (for example, zooming in or zooming out) based on different scales may be switched by performing a UI operation. For example, presentation is performed based on a microscopic scale, a mesoscopic scale, and a macroscopic scale. Microscopic traffic information is traffic information of the vehicle (namely, the traffic information of the driver), mesoscopic traffic information is traffic information of the road, and macroscopic traffic information is traffic information of the road network. The electronic map is used as an example. In FIG. 14(a), FIG. 14(b), and FIG. 14(c), after the electronic map is zoomed out, the traffic information (in FIG. 14(a)) of the road network may be presented. After the electronic map is zoomed in, the traffic information (in FIG. 14(b)) of the road may be presented. After the electronic map is further zoomed in, the traffic information (in FIG. 14(c)) of the vehicle may be presented. Therefore, the traffic information on different levels may be presented. This is practical and flexible.

The traffic information processing method provided in embodiments of this application may be performed by a traffic information processing apparatus (for example, the center server). The traffic information processing apparatus may be divided into functional modules based on the foregoing method examples. For example, functional modules corresponding to the functions may be obtained through division, or two or more functions may be integrated into one processing module. The integrated module may be implemented in a form of hardware, or may be implemented in a form of a software functional module. It should be noted that, in embodiments of this application, division into the modules is an example, and is merely logical function division. During actual implementation, another division manner may be used.

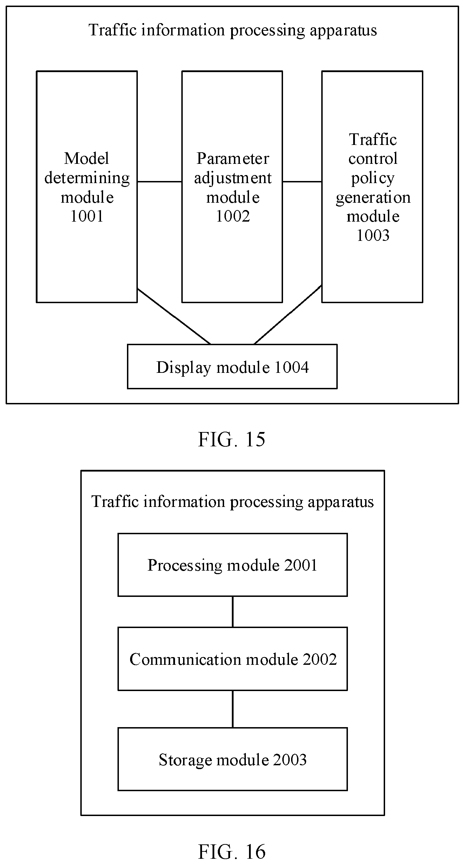

When each functional module corresponding to each function is obtained through division, FIG. 15 is a possible schematic diagram of a structure of the traffic information processing apparatus in the foregoing embodiment. As shown in FIG. 15, the traffic information processing apparatus may include a model determining module 1001, a parameter adjustment module 1002, and a traffic control policy generation module 1003. The model determining module 1001 may be configured to support the traffic information processing apparatus in performing S101, S201, S301, and S401 in the foregoing method embodiments. The parameter adjustment module 1002 may be configured to support the traffic information processing apparatus in performing S102, S202, S302, and S402 in the foregoing method embodiments. The traffic control policy generation module 1003 may be configured to support the traffic information processing apparatus in performing S103, S203 (including S2031 and S2032), S303 (including S3031 and S3032), and S403 (including S4031 and S4032) in the foregoing method embodiments. All related content of the steps in the foregoing method embodiments may be cited in function description of corresponding functional modules. Details are not described herein again.

Optionally, as shown in FIG. 15, the traffic information processing apparatus provided in embodiments of this application may further include a display module 1004. The display module is configured to support the traffic information processing apparatus in presenting traffic information on a plurality of levels, where the traffic information on a plurality of levels is separately traffic information of a driver, traffic information of a target road, and traffic information of a target road network.

When an integrated unit is used, FIG. 16 is a possible schematic diagram of a structure of a traffic information processing apparatus in the foregoing embodiment. As shown in FIG. 16, the traffic information processing apparatus may include a processing module 2001 and a communication module 2002. The processing module 2001 may be configured to control and manage an action of the traffic information processing apparatus. For example, the processing module 2001 may be configured to support the traffic information processing apparatus in performing S101 to S103, S201 to S203 (S203 includes S2031 and S2032), S301 to S303 (S303 includes S3031 and S3032), and S401 to S403 (S403 includes S4031 and S4032) in the foregoing method embodiments, and/or another process of the technology described in this specification. The communication module 2002 is configured to support the traffic information processing apparatus in communicating with another network entity. Optionally, as shown in FIG. 16, the traffic information processing apparatus may further include a storage module 2003, configured to store program code and data of the traffic information processing apparatus.

The processing module 2001 may be a processor or a controller (for example, the processor 11 shown in FIG. 2), for example, a CPU, general-purpose processor, a DSP, an ASIC, an FPGA or another programmable logic device, a transistor logic device, a hardware component, or any combination thereof. The processing module 2001 may implement or execute various example logic blocks, modules, and circuits described with reference to content disclosed in embodiments of this application. The processing module may alternatively be a combination of processors implementing a computing function, for example, a combination of one or more microprocessors, or a combination of a DSP and a microprocessor. The communication module 2002 may be a transceiver, a transceiver circuit, a communication interface (for example, the communication interface 13 shown in FIG. 2), or the like. The storage module 2003 may be a memory (for example, the memory 12 shown in FIG. 2).

When the processing module 2001 is the processor, the communication module 2002 is the transceiver, and the storage module 2003 is the memory, the processor, the transceiver, and the memory may be connected through a bus. The bus may be a peripheral component interconnect (peripheral component interconnect, PCI) bus, an extended industry standard architecture (extended industry standard architecture, EISA) bus, or the like. Buses may be classified into an address bus, a data bus, a control bus, and the like.

All or some of the embodiments may be implemented by using software, hardware, firmware, or any combination thereof. When a software program is used to implement the embodiments, the embodiments may be implemented completely or partially in a form of a computer program product. The computer program product includes one or more computer instructions. When the computer instructions are loaded and executed on a computer, all or a part of the procedures or functions according to the embodiments of this invention are generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, such as a server or a data center, integrating one or more usable media. The usable medium may be a magnetic medium (for example, a floppy disk, a magnetic disk, or a magnetic tape), an optical medium (for example, a digital video disc (digital video disc, DVD)), a semiconductor medium (for example, a solid-state drive (solid-state drive, SSD)), or the like.

The foregoing description about implementations allows a person skilled in the art to understand that, for the purpose of convenient and brief description, division into the foregoing functional modules is taken as an example for illustration. During actual application, the foregoing functions can be allocated to different modules and implemented as required, that is, an inner structure of an apparatus is divided into different functional modules to implement all or a part of the functions described above. For detailed working processes of the foregoing system, apparatus, and unit, refer to corresponding processes in the foregoing method embodiments. Details are not described herein again.

In the several embodiments provided in this application, it should be understood that the disclosed system, apparatus, and method may be implemented in other manners. For example, division into the modules or units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected depending on actual requirements to achieve the objectives of the solutions in the embodiments.

In addition, functional units in embodiments of this application may be integrated into one processing unit, or each of the units may exist alone physically, or two or more units may be integrated into one unit. The integrated unit may be implemented in a form of hardware, or may be implemented in a form of a software functional unit.

When the integrated unit is implemented in the form of a software functional unit and is sold or used as an independent product, the integrated unit may be stored in a computer-readable storage medium. Based on such an understanding, the technical solutions of this application essentially, or the part contributing to the conventional technology, or all or some of the technical solutions may be implemented in a form of a software product. The computer software product is stored in a storage medium and includes several instructions for instructing a computer device (which may be a personal computer, a server, a network device, or the like) to perform all or some of the steps of the methods described in the embodiments of this application. The foregoing storage medium includes any medium that can store program code, such as a flash memory, a removable hard disk, a read-only memory, a random access memory, a magnetic disk, or an optical disc.

The foregoing description is merely a specific implementation of this application, but is not intended to limit the protection scope of this application. Any variation or replacement within the technical scope disclosed in this application shall fall within the protection scope of this application. Therefore, the protection scope of this application shall be subject to the protection scope of the claims.

**Claims**

1. A traffic information processing method, comprising:

   determining a target traffic model from a plurality of candidate traffic models by using historical traffic data, wherein the candidate traffic model comprises at least one of the following: a driver model, a road propagation model, or a road network evaluation model, the historical traffic data comprises at least one of the following: traffic data of a driver in a historical time period, traffic data of a target road in a historical time period, or traffic data of a target road network in a historical time period, and the candidate traffic model corresponds to the historical traffic data;
   adjusting a parameter of the target traffic model based on current traffic data, wherein the parameter of the target traffic model is used for describing a current traffic running status, the current traffic data comprises at least one of the following: traffic data of the driver in a current time period, traffic data of the target road in a current time period, or traffic data of the target road network in a current time period, and the current traffic data corresponds to the target traffic model; and
   generating a traffic control policy based on an adjusted parameter of the target traffic model, wherein the traffic control policy comprises at least one of the following: navigation information of the driver, traffic signal control information, or road network boundary control information.

2. The method according to claim 1, wherein the historical traffic data is the traffic data of the driver in the historical time period, the target traffic model is a target driver model, and the traffic data of the driver comprises traffic data of a vehicle driven by the driver or travel habit data of the driver;

   traffic data of the vehicle driven by the driver in the historical time period comprises an acceleration and a speed of the vehicle driven by the driver in the historical time period, and travel habit data of the driver in the historical time period comprises a travel probability or travel probabilities of one or more trips of the driver in the historical time period and a selection probability or selection probabilities of one or more routes corresponding to each trip; and
   the traffic data of the driver in the current time period comprises an acceleration and a speed of the vehicle driven by the driver in the current time period, and travel habit data of the driver in the current time period comprises a travel probability or travel probabilities of one or more trips of the driver in the current time period and a selection probability or selection probabilities of one or more routes corresponding to each trip.

3. The method according to claim 1 or 2, wherein the traffic control policy is the navigation information of the driver, and the generating a traffic control policy based on an adjusted parameter of the target traffic model comprises:

setting a weight of a path on a navigation map based on an adjusted parameter of the target driver model, wherein the parameter of the target driver model is used for describing a current driving habit of the driver; and generating the navigation information of the driver based on the weight of the path on the navigation map.

4. The method according to claim 1, wherein the historical traffic data is the traffic data of the target road in the historical time period, and the target traffic model is a target road propagation model;

the traffic data of the target road in the historical time period comprises at least two of a flow, a speed, and a density of the target road in the historical time period; and
the traffic data of the target road in the current time period comprises at least two of a flow, a speed, and a density of the target road in the current time period.

5. The method according to claim 1 or 4, wherein the traffic control policy is the traffic signal control information, and the generating a traffic control policy based on an adjusted parameter of the target traffic model comprises:

determining a signal control constraint condition based on an adjusted parameter of the target road propagation model, wherein the parameter of the target road propagation model is used for describing a current traffic running status of the target road; and
generating the traffic signal control information by using the signal control constraint condition as an optimization condition of a traffic signal control model, wherein the signal control constraint condition is determined based on the adjusted parameter of the target road propagation model.

6. The method according to claim 1, wherein the historical traffic data is the traffic data of the target road network in the historical time period, and the target traffic model is a target road network evaluation model;

the traffic data of the target road network in the historical time period comprises at least two of a flow, a speed, and a density of the target road network in the historical time period; and
the traffic data of the target road network in the current time period comprises at least two of a flow, a speed, and a density of the target road network in the current time period.

7. The method according to claim 1 or 6, wherein the traffic control policy is the road network boundary control information, and the generating a traffic control policy based on an adjusted parameter of the target traffic model comprises:

determining a capacity or a flow of the target road network based on an adjusted parameter of the target road network evaluation model and a macroscopic traffic flow model condition, wherein the parameter of the target road network evaluation model is used for describing a current traffic running status of the target road network; and
generating the road network boundary control information based on the capacity or the flow of the target road network.

8. The method according to claim 6 or 7, wherein
the traffic data of the target road network is determined based on traffic data of a road section comprised in the target road network.

9. The method according to any one of claims 1 to 8, wherein the method further comprises:

presenting traffic information on different levels based on different scales, wherein the traffic information on different levels is separately traffic information of the driver, traffic information of the target road, and traffic information of the target road network, wherein
the traffic information of the driver comprises the traffic data of the driver in the current time period and the parameter of the target driver model, the traffic information of the target road comprises the traffic data of the target road in the current time period and the parameter of the target road propagation model, and the traffic information of the target road network comprises the traffic data of the target road network in the current time period and the parameter of the target road network evaluation model.

10. The method according to claim 9, wherein
presenting the traffic information on different levels in one or more of the following manners: a display, an electronic map, or a projection.

11. A traffic information processing apparatus, comprising a model determining module, a parameter adjustment module, and a traffic control policy generation module, wherein

the model determining module is configured to determine a target traffic model from a plurality of candidate traffic models by using historical traffic data, wherein the candidate traffic model comprises at least one of the following: a driver model, a road propagation model, or a road network evaluation model, the historical traffic data comprises at least one of the following: traffic data of a driver in a historical time period, traffic data of a target road in a historical time period, or traffic data of a target road network in a historical time period, and the candidate traffic model corresponds to the historical traffic data;

the parameter adjustment module is configured to adjust a parameter of the target traffic model based on current traffic data, wherein the parameter of the target traffic model is used for describing a current traffic running status, the current traffic data comprises at least one of the following: traffic data of a vehicle driven by the driver in a current time period, traffic data of the target road in a current time period, or traffic data of the target road network in a current time period, and the current traffic data corresponds to the target traffic model; and

the traffic control policy generation module is configured to generate a traffic control policy based on an adjusted parameter of the target traffic model, wherein the traffic control policy comprises at least one of the following: navigation information of the driver, traffic signal control information, or road network boundary control information.

12. The apparatus according to claim 11, wherein the historical traffic data is the traffic data of the driver in the historical time period, the target traffic model is a target driver model, and the traffic data of the driver comprises traffic data of the vehicle driven by the driver or travel habit data of the driver;

traffic data of the vehicle driven by the driver in the historical time period comprises an acceleration and a speed of the vehicle driven by the driver in the historical time period, and travel habit data of the driver in the historical time period comprises a travel probability or travel probabilities of one or more trips of the driver in the historical time period and a selection probability or selection probabilities of one or more routes corresponding to each trip; and

the traffic data of the driver in the current time period comprises an acceleration and a speed of the vehicle driven by the driver in the current time period, and travel habit data of the driver in the current time period comprises a travel probability or travel probabilities of one or more trips of the driver in the current time period and a selection probability or selection probabilities of one or more routes corresponding to each trip.

13. The apparatus according to claim 11 or 12, wherein the traffic control policy is the navigation information of the driver; and

the traffic control policy generation module is specifically configured to: set a weight of a path on a navigation map based on an adjusted parameter of the target driver model; and generate the navigation information of the driver based on the weight of the path on the navigation map, wherein the parameter of the target driver model is used for describing a current driving habit of the driver.

14. The apparatus according to claim 11, wherein the historical traffic data is the traffic data of the target road in the historical time period, and the target traffic model is a target road propagation model;

the traffic data of the target road in the historical time period comprises at least two of a flow, a speed, and a density of the target road in the historical time period; and

the traffic data of the target road in the current time period comprises at least two of a flow, a speed, and a density of the target road in the current time period.

15. The apparatus according to claim 11 or 14, wherein the traffic control policy is the traffic signal control information; and

the traffic control policy generation module is specifically configured to: determine a signal control constraint condition based on an adjusted parameter of the target road propagation model; and generate the traffic signal control information by using the signal control constraint condition as an optimization condition of a traffic signal control model, wherein the parameter of the target road propagation model is used for describing a current traffic running status of the target road, and the signal control constraint condition is determined based on the adjusted parameter of the target road propagation model.

16. The apparatus according to claim 11, wherein the historical traffic data is the traffic data of the target road network in the historical time period, and the target traffic model is a target road network evaluation model;

the traffic data of the target road network in the historical time period comprises at least two of a flow, a speed, and a density of the target road network in the historical time period; and

the traffic data of the target road network in the current time period comprises at least two of a flow, a speed, and a density of the target road network in the current time period.

17. The apparatus according to claim 11 or 16, wherein the traffic control policy is the road network boundary control information; and

the traffic control policy generation module is specifically configured to: determine a capacity or a flow of the target road network based on an adjusted parameter of the target road network evaluation model and a macroscopic traffic flow model condition; and generate the road network boundary control information based on the capacity or the flow of the target road network, wherein the parameter of the target road network evaluation model is used for describing a current traffic running status of the target road network.

18. The apparatus according to claim 16 or 17, wherein

the traffic data of the target road network is determined based on traffic data of a road section comprised in the target road network.

19. The apparatus according to any one of claims 11 to 18, wherein the apparatus further comprises a display module;

the display module is configured to present traffic information on different levels based on different scales, wherein the traffic information on different levels is separately traffic information of the driver, traffic information of the target road, and traffic information of the target road network; and

the traffic information of the driver comprises the traffic data of the driver in the current time period and the parameter of the target driver model, the traffic information of the target road comprises the traffic data of the target road in the current time period and the parameter of the target road propagation model, and the traffic information of the target road network comprises the traffic data of the target road network in the current time period and the parameter of the target road network evaluation model.

20. The apparatus according to claim 19, wherein

the traffic information on different levels is presented in one or more of the following manners: a display, an electronic map, or a projection.

21. A traffic information processing apparatus, comprising a processor and a memory coupled to the processor, wherein the memory is configured to store computer instructions, and when the apparatus runs, the processor executes the computer instructions stored in the memory, to enable the apparatus to perform the method according to any one of claims 1 to 10.

22. A computer-readable storage medium, wherein the computer-readable storage medium may comprise computer instructions, and when the computer instructions are run on a computer, the method according to any one of claims 1 to 10 is performed.

Sensor end 1

Electronic
police

Sectional
detector

Vehicle sensor

Sensor end 2

Sensor end 3

⋮

Sensor end N

Traffic center side

Center server/Center cloud

FIG. 1(a)

Sensor end 1

Electronic police

Sectional detector

Vehicle sensor

Sensor end 2

Sensor end 3

⋮

Sensor end N

Edge side 1

Edge service unit

Edge side 2

Edge service unit

⋮

Edge side K

Edge service unit

Traffic center side

Center server/ Center cloud

## FIG. 1(b)

Server 10

Processor 11

Communication interface 13

Memory 12

## FIG. 2

Determine a target traffic model from a plurality of candidate traffic models by using historical traffic data — S101

Adjust a parameter of the target traffic model based on current traffic data — S102

Generate a traffic control policy based on an adjusted parameter of the target traffic model — S103

FIG. 3

Determine a target driver model from a plurality of driver models by using traffic data of a driver in a historical time period — S201

Adjust a parameter of the target driver model based on traffic data of the driver in a current time period — S202

Generate navigation information of the driver based on an adjusted parameter of the target driver model — S203

FIG. 4

| | |
|---|---|
| Determine a target driver model from a plurality of driver models by using traffic data of a driver in a historical time period | S201 |

↓

| | |
|---|---|
| Adjust a parameter of the target driver model based on traffic data of the driver in a current time period | S202 |

↓

| | |
|---|---|
| Set a weight of a path on a navigation map based on an adjusted parameter of the target driver model | S2031 |

↓

| | |
|---|---|
| Generate navigation information of the driver based on the weight of the path on the navigation map | S2032 |

FIG. 5

5 km       5 km

①——Small road——②——Small road——③

12 km
Expressway

15 km
Main road

④

FIG. 6

Determine a target road propagation model from a plurality of road propagation models by using traffic data of a target road in a historical time period ⟋ S301

Adjust a parameter of the target road propagation model based on traffic data of the target road in a current time period ⟋ S302

Generate traffic signal control information based on an adjusted parameter of the target road propagation model ⟋ S303

FIG. 7

Curve 1

Flow-density curve

FIG. 8

FIG. 9

| Determine a target road propagation model from a plurality of road propagation models by using traffic data of a target road in a historical time period | S301 |

| Adjust a parameter of the target road propagation model based on traffic data of the target road in a current time period | S302 |

| Determine a signal control constraint condition based on an adjusted parameter of the target road propagation model | S3031 |

| Generate traffic signal control information by using the signal control constraint condition as an optimization condition of a traffic signal control model | S3032 |

FIG. 10

Cell (3, 1)

Road section 3

Road section 1

| Cell (1, 1) | Cell (1, 2) | ... |

Road section 2

| Cell (2, 1) | Cell (2, 2) | ... |

Traffic lights

⋮

Cell (4, 2)

Road section 4

Cell (4, 1)

FIG. 11

Determine a target road network evaluation model from a plurality of road network evaluation models by using traffic data of a target road network in a historical time period — S401

Adjust a parameter of the target road network evaluation model based on traffic data of the target road network in a current time period — S402

Generate road network boundary control information based on an adjusted parameter of the target road network evaluation model — S403

FIG. 12

Determine a target road network evaluation model from a plurality of road network evaluation models by using traffic data of a target road network in a historical time period — S401

Adjust a parameter of the target road network evaluation model based on traffic data of the target road network in a current time period — S402

Determine a capacity or a flow of the target road network based on an adjusted parameter of the target road network evaluation model and a macroscopic traffic flow model — S4031

Generate road network boundary control information based on the capacity or the flow of the target road network — S4032

FIG. 13

Road
network 1

Real-time
flow: 2488
Real-time
capacity: 3820

FIG. 14(a)

Zoom in

Flow: 292

Flow: 253

Flow: 686

Flow:
311

FIG. 14(b)

Zoom in

Speed: 50 km/h

FIG. 14(c)

Traffic information processing apparatus

Model determining module 1001

Parameter adjustment module 1002

Traffic control policy generation module 1003

Display module 1004

FIG. 15

Traffic information processing apparatus

Processing module 2001

Communication module 2002

Storage module 2003

FIG. 16

## INTERNATIONAL SEARCH REPORT

| International application No. |
|---|
| **PCT/CN2020/129078** |

**A.    CLASSIFICATION OF SUBJECT MATTER**

G08G 1/01(2006.01)i

According to International Patent Classification (IPC) or to both national classification and IPC

**B.    FIELDS SEARCHED**

Minimum documentation searched (classification system followed by classification symbols)

G08G

Documentation searched other than minimum documentation to the extent that such documents are included in the fields searched

Electronic data base consulted during the international search (name of data base and, where practicable, search terms used)

CNABS, CNTXT, PATENTICS: 历史, 数据, 信息, 确定, 匹配, 选择, 确认, 模型, 当前, 实时, 调整, 优化, 调节, 参数, 最优, 最佳, 合适, 目标, 模型库, 备选, 候选, 待选, 更新, 交通, 路网; VEN, SIPOABS, USTXT, EPTXT, WOTXT, JPTXT: history, quondam, preterit, information, data, match, confirm, select, elect, model, currently, correct, modify, amend, adjust, regulate, redressal

**C.    DOCUMENTS CONSIDERED TO BE RELEVANT**

| Category* | Citation of document, with indication, where appropriate, of the relevant passages | Relevant to claim No. |
|---|---|---|
| PX | CN 110969857 A (HUAWEI TECHNOLOGIES CO., LTD.) 07 April 2020 (2020-04-07) claims 1-22 | 1-22 |
| X | CN 102521989 A (SHANXI TRAFFIC PLANNING SURVEY DESIGN INSTITUTE) 27 June 2012 (2012-06-27) claim 1, description, paragraphs 3-19 | 1, 4-5, 11, 14-15, 21-22 |
| A | CN 102682601 A (NANJING UNIVERSITY) 19 September 2012 (2012-09-19) entire document | 1-22 |
| A | CN 103871246 A (NANJING UNIVERSITY) 18 June 2014 (2014-06-18) entire document | 1-22 |
| A | US 2014244158 A1 (TOMTOM GLOBAL ASSETS B V) 28 August 2014 (2014-08-28) entire document | 1-22 |
| A | CN 110032782 A (ENJOYOR CO., LTD.) 19 July 2019 (2019-07-19) entire document | 1-22 |

☑ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **05 January 2021** | **29 January 2021** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088**<br>**China** | |
| Facsimile No. **(86-10)62019451** | Telephone No. |

Form PCT/ISA/210 (second sheet) (January 2015)

**INTERNATIONAL SEARCH REPORT**

International application No.

**PCT/CN2020/129078**

**C.    DOCUMENTS CONSIDERED TO BE RELEVANT**

| Category* | Citation of document, with indication, where appropriate, of the relevant passages | Relevant to claim No. |
|---|---|---|
| A | CN 110375760 A (BEIJING BAIDU NETCOM SCIENCE AND TECHNOLOGY CO., LTD.) 25 October 2019 (2019-10-25) <br> entire document | 1-22 |
| A | US 2016189044 A1 (UNIV. SOUTHERN CALIFORNIA) 30 June 2016 (2016-06-30) <br> entire document | 1-22 |
| A | CN 110390415 A (BEIJING DIDI INFINITY TECHNOLOGY AND DEVELOPMENT CO., LTD.) 29 October 2019 (2019-10-29) <br> entire document | 1-22 |

Form PCT/ISA/210 (second sheet) (January 2015)

**INTERNATIONAL SEARCH REPORT**
Information on patent family members

International application No.

**PCT/CN2020/129078**

| Patent document cited in search report | | | Publication date (day/month/year) | Patent family member(s) | | | Publication date (day/month/year) |
|---|---|---|---|---|---|---|---|
| CN | 110969857 | A | 07 April 2020 | None | | | |
| CN | 102521989 | A | 27 June 2012 | CN | 102521989 | B | 12 March 2014 |
| CN | 102682601 | A | 19 September 2012 | CN | 102682601 | B | 26 February 2014 |
| CN | 103871246 | A | 18 June 2014 | CN | 103871246 | B | 04 May 2016 |
| US | 2014244158 | A1 | 28 August 2014 | US | 8755991 | B2 | 17 June 2014 |
| | | | | US | 2010063715 | A1 | 11 March 2010 |
| | | | | US | 9599488 | B2 | 21 March 2017 |
| CN | 110032782 | A | 19 July 2019 | None | | | |
| CN | 110375760 | A | 25 October 2019 | None | | | |
| US | 2016189044 | A1 | 30 June 2016 | US | 9286793 | B2 | 15 March 2016 |
| | | | | US | 9996798 | B2 | 12 June 2018 |
| | | | | US | 2014114556 | A1 | 24 April 2014 |
| CN | 110390415 | A | 29 October 2019 | WO | 2019201309 | A1 | 24 October 2019 |

Form PCT/ISA/210 (patent family annex) (January 2015)

**REFERENCES CITED IN THE DESCRIPTION**

**Patent documents cited in the description**

• CN 201911380305